(19) Europäisches Patentamt / European Patent Office / Office européen des brevets

(11) EP 1 889 006 B1

(12) EUROPÄISCHE PATENTSCHRIFT

(45) Veröffentlichungstag und Bekanntmachung des Hinweises auf die Patenterteilung:
**25.09.2013 Patentblatt 2013/39**

(21) Anmeldenummer: 06753731.6

(22) Anmeldetag: **19.05.2006**

(51) Int Cl.:
*G01P 3/22* (2006.01)     *G01P 7/00* (2006.01)
*G01P 15/08* (2006.01)    *G01P 15/18* (2013.01)

(86) Internationale Anmeldenummer:
**PCT/EP2006/004749**

(87) Internationale Veröffentlichungsnummer:
**WO 2006/128592 (07.12.2006 Gazette 2006/49)**

(54) **VERFAHREN UND VORRICHTUNG ZUR BESTIMMUNG DER RELATIVEN LAGE, GESCHWINDIGKEIT UND/ODER DER BESCHLEUNIGUNG EINES KÖRPERS**

METHOD AND DEVICE FOR DETERMINING THE RELATIVE POSITION, SPEED AND/OR ACCELERATION OF A BODY

PROCEDE ET DISPOSITIF POUR DETERMINER LA POSITION RELATIVE, LA VITESSE ET/OU L'ACCELERATION D'UN CORPS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.06.2005 DE 102005025478**

(43) Veröffentlichungstag der Anmeldung:
**20.02.2008 Patentblatt 2008/08**

(73) Patentinhaber: **Albert-Ludwigs-Universität Freiburg**
**79098 Freiburg (DE)**

(72) Erfinder:
• **PETERS, Christian**
**79100 Freiburg (DE)**
• **BUHMANN, Alexander**
**79110 Freiburg (DE)**
• **MANOLI, Yiannos**
**79104 Freiburg (DE)**

(74) Vertreter: **Huwer, Andreas et al**
**Schwaighofstrasse 1**
**79100 Freiburg (DE)**

(56) Entgegenhaltungen:
**DE-A1- 19 962 687**

• **VAN SICKLE D P ET AL: "Demonstration of a methodology for wheelchair acceleration analysis" ENGINEERING IN MEDICINE AND BIOLOGY SOCIETY, 1993. PROCEEDINGS OF THE 15TH ANNUAL INTERNATIONAL CONFERENCE OF THE IEEE OCT 28-31, 1993, PISCATAWAY, NJ, USA,IEEE, 28. Oktober 1993 (1993-10-28), Seiten 1301-1302, XP010574830 ISBN: 0-7803-1377-1**
• **PARSA K ET AL: "Design and mechatronic implementation of an accelerometer-based, kinematically redundant inertial measurement unit" ADVANCED INTELLIGENT MECHATRONICS. PROCEEDINGS, 2005 IEEE/ ASME INTERNATIONAL CONFERENCE ON MONTEREY, CA JULY 24-28, 2005, PISCATAWAY, NJ, USA,IEEE, 24. Juli 2005 (2005-07-24), Seiten 644-651, XP010837850 ISBN: 0-7803-9047-4**

EP 1 889 006 B1

**Beschreibung**

Die Erfindung betrifft ein Verfahren zur Bestimmung der relativen Lage, Geschwindigkeit und/oder Beschleunigung eines in einem dreidimensionalen Raum bewegbaren Körpers, wobei eine Anzahl von Linearbeschleunigungssensoren, die jeweils eine sensitive Messachse haben, bereitgestellt wird, und wobei die einzelnen Linearbeschleunigungssensoren jeweils an einer zu dem Körper ortsfesten Position $P_i$ angeordnet werden. Außerdem betrifft die Erfindung eine Vorrichtung zur Bestimmung der relativen Lage, Geschwindigkeit und/oder Beschleunigung eines Körpers in einem dreidimensionalen Raum, wobei die Vorrichtung zur Erfassung mindestens eines Beschleunigungsmesssignals $\vec{a} = (a_1, a_2, a_3, a_4, ... a_n)$ eine Anzahl von ortsfest in Bezug zu dem Körper angeordneten Linearbeschleunigungssensoren aufweist.

Dabei wird unter einer relativen Lage eine auf eine Bezugsposition, wie z.B. eine Startposition, bezogene Lage verstanden. Unter einem Linearbeschleunigungssensor wird ein unidirektionaler Beschleunigungssensor verstanden, der für Beschleunigungen, die zumindest eine Komponente haben, die auf der Messachse des Linearbeschleunigungssensors liegt, empfindlich ist. Die Linearbeschleunigungssensoren können baulich voneinander getrennt jeweils in einem eigenen Gehäuse angeordnet sei. Es ist aber auch möglich, dass mindestens zwei und insbesondere drei unterschiedliche Messachsen aufweisende Linearbeschleunigungssensoren als multidirektionaler Beschleunigungssensor in ein gemeinsames elektrisches oder elektronisches Bauelement integriert sind.

Ein Verfahren und eine Vorrichtung zur Bestimmung der Winkelgeschwindigkeit eines drehbaren Körpers, nämlich eines Kraftfahrzeugs, sind aus DE 199 62 687 A1 bekannt. Zur Messung eines Beschleunigungsmesssignals werden an dem Körper an vier voneinander beabstandeten Positionen insgesamt neun Unearbeschleunigungssensoren fest angebracht, die jeweils eine sensitive, durch die entsprechende Position verlaufende Messachse haben. An einer ersten Position, die im Ursprung eines Körperfesten Koordinatensystems angeordnet ist, sind drei Linearbeschleunigungssensoren vorgesehen, die jeweils mit ihrer sensitiven Messachse in Richtung einer der Achsen x, y, z des Körperfesten Koordinatensystems orientiert sind. An einer zweiten Position, die in einem Abstand $r_1$ vom Ursprung auf der y-Achse angeordnet ist, sind zwei weitere Linearsensoren angeordnet, von denen der eine mit seiner Messachse in z-Richtung und der andere mit seiner Messachse in x-Richtung orientiert ist. An einer dritten, Position, die in einem Abstand $r_2$ vom Ursprung auf der x-Achse angeordnet ist, sind zwei weitere Linearsensoren vorgesehen, von denen der eine mit seiner Messachse in y-Richtung und der andere in z-Richtung orientiert ist. In entsprechender Weise sind an einer vierten, auf der z-Achse in einem Abstand $r_3$ vom Ursprung angeordneten Position, zwei Linearsensoren vorgesehen, die in x- bzw. y-Richtung orientiert sind. Für die Beschleunigung $\bar{a}$ in einem beliebigen Punkt P gilt:

$$\bar{a} = A(t) + \dot{\bar{\omega}} \times \bar{r} + \bar{\omega} \times (\bar{\omega} \times \bar{r}) + 2 \cdot \bar{\omega} \times \dot{\bar{r}} + \ddot{\bar{r}} \qquad \text{Gl. (1)}$$

Dabei bedeuten:

A die Beschleunigung des Ursprungs des Körperfesten Koordinatensystems,
t die Zeit,
$\bar{\omega}$ die Winkelgeschwindigkeit des Körpers, und
$\bar{r}$ den Positionsvektor, der vom Ursprung des Körperfesten Koordinatensystems zum Punkt P zeigt.

Geht man davon aus, dass ein Linearbeschleunigungssensor fest am Punkt P des $\ddot{\bar{r}}$ Körpers montiert ist, so werden die Terme $\dot{\bar{r}}$ und zu Null. Mit dieser Annahme erhält man:

$$\bar{a} = A(t) + \dot{\bar{\omega}} \times \bar{r} + \bar{\omega} \times (\bar{\omega} \times \bar{r}) \qquad \text{Gl. (2)}$$

Dabei handelt es sich um ein dreidimensionales, nicht lineares Differentialgleichungssystem, das nicht allgemein analytisch lösbar ist. Die Bestimmung der Winkelgeschwindigkeit des drehbaren Körpers erfordert daher einen relativ großen Rechenaufwand. Die nach dem Verfahren arbeitende Vorrichtung ist also entsprechend aufwändig, teuer und trotzdem meist ungenau.

Aus DE 199 62 687 A1 ist zwar auch bereits ein Verfahren bekannt, bei dem die Winkelbeschleunigung $\bar{\omega}_x$ des Körpers um die x-Achse mit Hilfe von nur vier fest an dem Körper montierten Linearbeschleunigungssensoren gemessen wird. Dabei sind zwei Linearbeschleunigungssensoren im Ursprung des Körperfesten Koordinatensystems angeordnet, wobei ein erster Linearbeschleunigungssensor mit seiner Messachse in Richtung der y-Achse und ein zweiter Linearbeschleunigungssensor mit seiner Messachse in Richtung der z-Achse orientiert ist. Ein dritter Linearbeschleunigungssensor ist auf der y-Achse in einem Abstand $r_1$ vom Ursprung angeordnet und in Richtung der z-Achse ausgerichtet. Ein vierter Linearbeschleunigungssensor ist auf der z-Achse in einem Abstand $r_3$ vom Ursprung angeordnet und mit seiner sensitiven Messachse in Richtung der y-Achse orientiert. Setzt man die Positionen der vier Linearbeschleunigungssensoren in Gleichung (2) ein, ergibt sich nach algebraischer Umformung:

$$\dot{\omega}_x = \frac{a_{z1} - a_{z0}}{2 \cdot r_1} - \frac{a_{y3} - a_{y0}}{2 \cdot r_3}, \qquad \text{Gl. (3)}$$

wobei $a_{z0}$, $a_{z1}$, $a_{y0}$, $a_{y1}$ die Messwerte der vier Linearbeschleunigungssensoren bedeuten. Die Gleichung (3) gilt jedoch nur für den Sonderfall, dass der erste und dritte Linearbeschleunigungssensor mit seiner Messachse jeweils genau in y-Richtung und die beiden anderen Linearbeschleunigungssensoren mit ihren Messachsen rechtwinklig dazu in z-Richtung orientiert sind. Der Artikel "Demonstration of a methodology for wheelchair acceleration analysis" von D. P. Van Sickle et al, erschienen in Engineering In Medicine And Biology Society (Seiten 1301 und 1302) beschreibt ein Verfahren und eine Vorrichtung zur Trägheitsnavigation. Zwölf Linearbeschleunigungssensoren werden jeweils an einer zu einem bewegbaren Körper ortsfesten Position, die sich durch einen stationären Positionsvektor beschreiben läßt, und mit einer Orientierung der Messachse, die sich durch einen Richtungsvektor beschreiben läßt, angeordnet. Aus den Beschleunigungsmesssignalen sowie den Positions- und Richtungsvektoren entsprechenden Kenngrößen wird ein Lage-, Geschwindigkeits- und/oder Beschleunigungs-Signal für den Körper gebildet. Die rechtwinklige Anordnung der Linearbeschleunigungssensoren ist jedoch in der Praxis problematisch, da bei der Herstellung und Montage der Linearbeschleunigungssensoren an dem Körper Fertigungs- und Positionierungstoleranzen auftreten. Vor allem durch die Montage der Linearbeschleunigungssensoren an dem Körper ergeben sich Abweichungen in der Ausrichtung und Positionierung fast zwangsläufig. Bereits kleine Abweichungen der Lage der Linearbeschleunigungssensoren von der Sensoranordnung, die der Gleichung (3) zugrunde liegt, können zu relativ großen Fehlern bei der Berechnung der Winkelbeschleunigung $\overline{\omega}_x$ führen. Dies ist besonders dann nachteilig, wenn das Winkelbeschleunigungssignal zur Bestimmung der Lage des Körpers integriert und die Fehler dabei schrankenlos aufaddiert werden. Besonders der letzte Punkt war entscheidend dafür, dass sich Vorrichtungen zur Lagebestimmung, die nur mit Linearbeschleunigungssensoren arbeiten, bisher nicht durchgesetzt haben.

Es besteht deshalb die Aufgabe, ein Verfahren und eine Vorrichtung der eingangs genannten Art zu schaffen, die auf einfache Weise eine exakte Bestimmung der Lage, Geschwindigkeit und/oder Beschleunigung eines Körpers ermöglichen.

Diese Aufgabe wird bezüglich des Verfahrens dadurch gelöst, dass eine Anzahl von n Linearbeschleunigungssensoren, die jeweils eine sensitive Messachse haben, bereitgestellt wird, dass die Anzahl n mindestens zwölf beträgt, dass die einzelnen Linearbeschleunigungssensoren jeweils an einer zu dem Körper ortsfesten Position $P_i$ angeordnet werden, die sich durch einen stationären Positionsvektor $\vec{r} = (r_{xi}, r_{yi}, r_{zi})$ beschreiben lässt, der von einem Körperfesten Bezugspunkt zu der betreffenden Position $P_i$ zeigt, wobei die Linearbeschleunigungssensoren derart ausgerichtet werden, dass ihre Messachse jeweils in Richtung eines Richtungsvektors $\vec{\Theta}_i = (\Theta_{xi}, \Theta_{yi}, \Theta_{zi})$ orientiert ist, wobei $i \in [1, 2, 3, 4, ... n]$ jeweils den betreffenden Linearbeschleunigungssensor und x, y, z durch den Bezugspunkt verlaufende Achsen eines Körperfesten Koordinatensystems bezeichnen, dass die Positionsvektoren $\vec{r}_i$ und die Richtungsvektoren $\vec{\Theta}_i$, derart gewählt werden, dass der Rang einer aus den Spaltenvektoren

$$\vec{s}_1 = \begin{pmatrix} \Theta_{x1} \\ \Theta_{x2} \\ \Theta_{x3} \\ \Theta_{x4} \\ \vdots \\ \Theta_{xn} \end{pmatrix}, \quad \vec{s}_2 = \begin{pmatrix} \Theta_{y1} \\ \Theta_{y2} \\ \Theta_{y3} \\ \Theta_{y4} \\ \vdots \\ \Theta_{yn} \end{pmatrix}, \quad \vec{s}_3 = \begin{pmatrix} \Theta_{z1} \\ \Theta_{z2} \\ \Theta_{z3} \\ \Theta_{z4} \\ \vdots \\ \Theta_{zn} \end{pmatrix}, \quad \vec{s}_4 = \begin{pmatrix} \Theta_{z1}r_{y1} - \Theta_{y1}r_{z1} \\ \Theta_{z2}r_{y2} - \Theta_{y2}r_{z2} \\ \Theta_{z3}r_{y3} - \Theta_{y3}r_{z3} \\ \Theta_{z4}r_{y4} - \Theta_{y4}r_{z4} \\ \vdots \\ \Theta_{zn}r_{yn} - \Theta_{yn}r_{zn} \end{pmatrix}, \quad \vec{s}_5 = \begin{pmatrix} \Theta_{x1}r_{z1} - \Theta_{z1}r_{x1} \\ \Theta_{x2}r_{z2} - \Theta_{z2}r_{x2} \\ \Theta_{x3}r_{z3} - \Theta_{z3}r_{x3} \\ \Theta_{x4}r_{z4} - \Theta_{z4}r_{x4} \\ \vdots \\ \Theta_{xn}r_{zn} - \Theta_{zn}r_{xn} \end{pmatrix},$$

$$
\bar{S}_6 = \begin{pmatrix} \Theta_{y1}r_{x1} - \Theta_{x1}r_{y1} \\ \Theta_{y2}r_{x2} - \Theta_{x2}r_{y2} \\ \Theta_{y3}r_{x3} - \Theta_{x3}r_{y3} \\ \Theta_{y4}r_{x4} - \Theta_{x4}r_{y4} \\ \vdots \\ \Theta_{yn}r_{xn} - \Theta_{xn}r_{n4} \end{pmatrix}, \bar{S}_7 = \begin{pmatrix} -\Theta_{y1}r_{y1} - \Theta_{z1}r_{z1} \\ -\Theta_{y2}r_{y2} - \Theta_{z2}r_{z2} \\ -\Theta_{y3}r_{y3} - \Theta_{z3}r_{z3} \\ -\Theta_{y4}r_{y4} - \Theta_{z4}r_{z4} \\ \vdots \\ -\Theta_{yn}r_{yn} - \Theta_{zn}r_{zn} \end{pmatrix}, \bar{S}_8 = \begin{pmatrix} -\Theta_{x1}r_{x1} - \Theta_{z1}r_{z1} \\ -\Theta_{x2}r_{x2} - \Theta_{z2}r_{z2} \\ -\Theta_{x3}r_{x3} - \Theta_{z3}r_{z3} \\ -\Theta_{x4}r_{x4} - \Theta_{z4}r_{z4} \\ \vdots \\ -\Theta_{xn}r_{xn} - \Theta_{zn}r_{zn} \end{pmatrix},
$$

$$
\bar{S}_9 = \begin{pmatrix} -\Theta_{x1}r_{x1} - \Theta_{y1}r_{y1} \\ -\Theta_{x2}r_{x2} - \Theta_{y2}r_{y2} \\ -\Theta_{x3}r_{x3} - \Theta_{y3}r_{y3} \\ -\Theta_{x4}r_{x4} - \Theta_{y4}r_{y4} \\ \vdots \\ -\Theta_{xn}r_{xn} - \Theta_{yn}r_{yn} \end{pmatrix}, \bar{S}_{10} = \begin{pmatrix} \Theta_{y1}r_{x1} + \Theta_{x1}r_{y1} \\ \Theta_{y2}r_{x2} + \Theta_{x2}r_{y2} \\ \Theta_{y3}r_{x3} + \Theta_{x3}r_{y3} \\ \Theta_{y4}r_{x4} + \Theta_{x4}r_{y4} \\ \vdots \\ \Theta_{yn}r_{xn} + \Theta_{xn}r_{yn} \end{pmatrix}, \bar{S}_{11} = \begin{pmatrix} \Theta_{z1}r_{x1} + \Theta_{x1}r_{z1} \\ \Theta_{z2}r_{x2} + \Theta_{x2}r_{z2} \\ \Theta_{z3}r_{x3} + \Theta_{x3}r_{z3} \\ \Theta_{z4}r_{x4} + \Theta_{x4}r_{z4} \\ \vdots \\ \Theta_{zn}r_{xn} + \Theta_{xn}r_{zn} \end{pmatrix}
$$

und

$$
\bar{S}_{12} = \begin{pmatrix} \Theta_{z1}r_{y1} + \Theta_{y1}r_{z1} \\ \Theta_{z2}r_{y2} + \Theta_{y2}r_{z2} \\ \Theta_{z3}r_{y3} + \Theta_{y3}r_{z3} \\ \Theta_{z4}r_{y4} + \Theta_{y4}r_{z4} \\ \vdots \\ \Theta_{zn}r_{yn} + \Theta_{yn}r_{zn} \end{pmatrix}
$$

gebildeten zwölfspaltigen Matrix gleich zwölf ist, dass mit Hilfe der Linearbeschleunigungssensoren mindestens ein Beschleunigungsmesssignal $\bar{a} = (a_1, a_2, a_3, a_4, ... a_n)$ erfasst wird, und dass aus dem Beschleunigungsmesssignal und Kenngrößen, welche die relative Lage und Orientierung der Linearbeschleunigungssensoren in dem Körperfesten Koordinatensystem beschreiben, ein Lage-, Geschwindigkeits-, und/oder Beschleunigungs-Signal für den Körper gebildet wird.

Die Erfindung geht von Gleichung (2) aus, die sich in Vektorschreibweise entsprechend ihrer Anteile in den Körperfesten Koordinaten x, y,z wie folgt schreiben lässt:

$$
\begin{pmatrix} a_x \\ a_y \\ a_z \end{pmatrix} = \begin{pmatrix} A_x \\ A_y \\ A_z \end{pmatrix} + \begin{pmatrix} r_z\dot{\omega}_y - r_y\dot{\omega}_z \\ -r_z\dot{\omega}_x + r_x\dot{\omega}_z \\ r_y\dot{\omega}_x - r_x\dot{\omega}_y \end{pmatrix} + \begin{pmatrix} r_y\omega_x\omega_y - r_x\omega_y^2 + r_z\omega_x\omega_z - r_x\omega_z^2 \\ r_x\omega_x\omega_y - r_y\omega_x^2 + r_z\omega_y\omega_z - r_y\omega_z^2 \\ r_x\omega_x\omega_z - r_z\omega_y^2 + r_y\omega_y\omega_z - r_z\omega_x^2 \end{pmatrix} \qquad \text{Gl. (4)}
$$

Da die einzelnen Linearbeschleunigungssensoren jeweils nur über eine sensitive Messachse mit dem Richtungsvektor $\bar{\Theta}_i$ verfügen, muss das Skalarprodukt aus Gleichung (4) und $\bar{\Theta}_i$ gebildet werden. Dies führt zu Gleichung (5), welche die mit dem Linearbeschleunigungssensor i im Punkt $P_i$ gemessene Beschleunigung $a_i$ beschreibt:

$$a_i = \theta_z(A_z - r_x\omega_x^2 - r_z\omega_y^2 + r_x\omega_x\omega_z + r_y\omega_y\omega_z + r_y\dot{\omega}_x - r_x\dot{\omega}_y) +$$
$$\theta_y(A_y - r_y\omega_x^2 - r_y\omega_z^2 + r_x\omega_x\omega_y + r_z\omega_y\omega_z + r_x\dot{\omega}_z - r_z\dot{\omega}_x) + \qquad \text{Gl. (5)}$$
$$\theta_x(A_x - r_x\omega_y^2 - r_x\omega_z^2 + r_y\omega_x\omega_y + r_z\omega_x\omega_z + r_x\dot{\omega}_y - r_y\dot{\omega}_z)$$

Betrachtet man die rechte Seite von Gleichung (5) so fällt auf, dass sie aus folgenden zwölf Werten aufgebaut ist, von denen sechs unabhängig sind:

$$w = \left\{ A_x, A_y, A_z, \dot{\omega}_x, \dot{\omega}_y, \dot{\omega}_z, \omega_x^2, \omega_y^2, \omega_z^2, \omega_x\omega_y, \omega_x\omega_z, \omega_y\omega_z \right\}$$

Die restlichen Werte beschreiben die Position $\bar{r}_i$, bzw. die Orientierung $\bar{\Theta}_i$ der Linearbeschleunigungssensoren im Raum.

Verwendet man nun eine Anzahl n von mindestens zwölf Linearbeschleunigungssensoren, so erhält man die Messwerte $a_1$ bis $a_n$. Schreibt man Gleichung (5) für die n Sensoren untereinander so ergibt sich folgendes Gleichungssystem, das hier aus Platzgründen nur teilweise dargestellt ist

$$a_1 = \theta_{z1}(A_z - r_{z1}\omega_x^2 - r_{z1}\omega_y^2 + r_{x1}\omega_x\omega_z + r_{y1}\omega_y\omega_z + r_{y1}\dot{\omega}_x - r_{x1}\dot{\omega}_y) + \dots$$
$$a_2 = \theta_{z2}(A_z - r_{z2}\omega_x^2 - r_{z2}\omega_y^2 + r_{x2}\omega_x\omega_z + r_{y2}\omega_y\omega_z + r_{y2}\dot{\omega}_x - r_{x2}\dot{\omega}_y) + \dots$$
$$\dots$$
$$\dots \qquad \text{Gl. (6)}$$
$$a_n = \theta_{z12}(A_z - r_{z12}\omega_x^2 - r_{z12}\omega_y^2 + r_{x12}\omega_x\omega_z + r_{y12}\omega_y\omega_z + r_{y12}\dot{\omega}_x - r_{x12}\dot{\omega}_y) + \dots$$

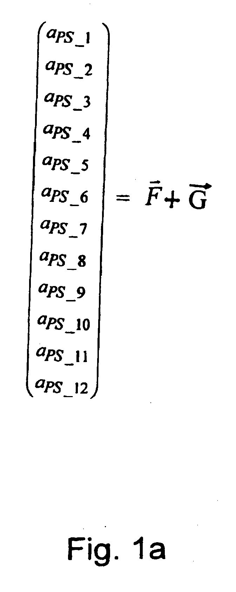

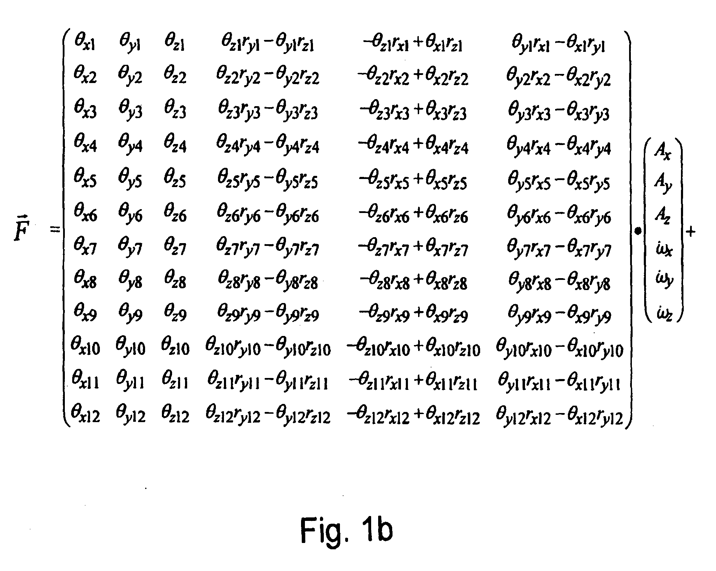

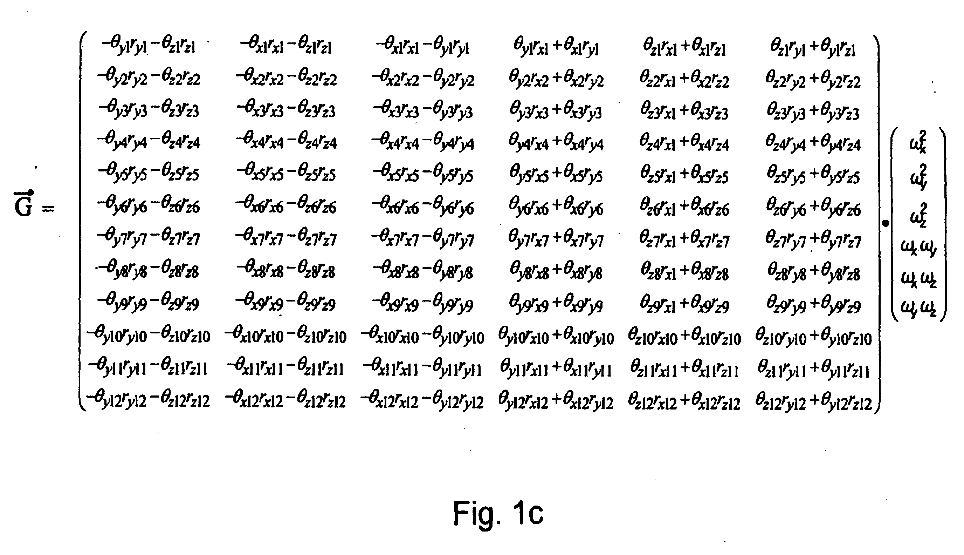

Separiert man die oben genannten zwölf Werte aus der rechten Seite von Gleichung (6), so ergibt sich das in Fig. 1a bis 1c abgebildete Gleichungssystem, das sich vereinfacht schreiben lässt als:

$$\vec{a} = \underline{A} \cdot \vec{w} \qquad \text{Gl. (7)}$$

Um nun aus dem Beschleunigungsmesssignal $\vec{a}$ die Bewegung des Körpers bestimmen zu können, muss die Gleichung (7) nach $\vec{w}$ aufgelöst werden. Dazu muss die 12 x n Matrix $\underline{A}$ invertierbar sein. Dies ist sie, wenn die Linearbeschleunigungssensoren derart angeordnet sind, dass die aus den in Anspruch 1 genannten Spaltenvektoren $\vec{s}_1$, $\vec{s}_2$, $\vec{s}_3$, $\vec{s}_4$, $\vec{s}_5$, $\vec{s}_6$, $\vec{s}_7$, $\vec{s}_8$, $\vec{s}_9$, $\vec{s}_{10}$ $\vec{s}_{11}$ und $\vec{s}_{12}$ gebildete Matrix $\underline{A}$ den Rang $Rg(\underline{A})=12$ aufweist bzw. linearunabhängig ist und damit die Determinante von $\underline{A}$ ungleich 0 ist. Die Berechnungsvorschrift lautet:

$$\vec{w} = \underline{A}^{-1} \cdot \vec{a} \qquad \text{Gl. (8)}$$

In vorteilhafter Weise ermöglicht das erfindungsgemäße Verfahren auch bei schräg zueinander angeordneten Messachsen auf einfache Weise eine exakte Bestimmung der relativen Lage, Geschwindigkeit und/oder Beschleunigung des Körpers, ohne dass ein Differentialgleichungssystem numerisch gelöst werden muss.

Bei einer bevorzugten Ausgestaltung der Erfindung werden nach dem Anordnen der Linearbeschleunigungssensoren an den Positionen $P_i$ mindestens fünf Messungen durchgeführt, bei denen der Körper in Bezug zu einem Erdfesten Koordinatensystem in unterschiedliche, bekannte Richtungen linear und/oder um mindestens ein bekanntes Drehzentrum beschleunigt wird, wobei bei jeder Messung jeweils ein Beschleunigungsmesssignal $\vec{a}_k = (a_1, a_2, a_3, a_4, \dots a_n)$ erfasst wird, und wobei aus den Beschleunigungsmesssignalen $\vec{a}_k$ und den Richtungen und/oder dem mindestens einen Drehzentrum die Kenngrößen für die Lage und Orientierung der Linearbeschleunigungssensoren bestimmt werden. Es wird also ein Kalibrierungsschritt durchgeführt, bei dem die Kenngrößen in Abhängigkeit von der jeweiligen Lage und Ausrichtung der Linearbeschleunigungssensoren ermittelt werden, so dass eventuelle Toleranzen, die bei der Fertigung und/oder der Positionierung der Linearbeschleunigungssensoren an dem Körper auftreten, bei der Erfassung des Lage-, Geschwindigkeits-, Beschleunigungs- und/oder Drehzentrum-Signals berücksichtigt werden. Somit kann auch bei relativ großen Fertigungs- und Positionierungstoleranzen der Linearbeschleunigungssensoren eine hohe Messgenauigkeit erreicht werden.

Bei einer vorteilhaften Ausführungsform der Erfindung wird aus dem Geschwindigkeits-Signal die relative Lage eines Drehzentrums ermittelt, um das sich der Köper in dem Raum dreht. Zum Bestimmen des Drehzentrums der Rotationsbewegung wird dabei der Punkt gesucht, an dem die Geschwindigkeit gleich Null ist. Bei einem Kraftfahrzeug kann beispielsweise in Abhängigkeit von der Lage des Drehpunkts relativ zum Zentrum des Kraftfahrzeugs und in Abhängigkeit von der Winkelgeschwindigkeit und/oder Winkelbeschleunigung des Kraftfahrzeugs kann das Auslösen einer zum Schutz der Fahrzeug-Insassen vorgesehenen Sicherheitseinrichtung gesteuert werden.

Bezüglich der Vorrichtung wird die vorstehend genannte Aufgabe dadurch gelöst, dass die Vorrichtung zur Erfassung mindestens eines Beschleunigungsmesssignals $\vec{a} = (a_1, a_2, a_3, a_4, ... a_n)$ eine Anzahl von n ortsfest in Bezug zu dem Körper angeordneten Linearbeschleunigungssensoren aufweist, dass die Anzahl n mindestens zwölf beträgt, dass sich die Positionen $P_i$, an denen die Linearbeschleunigungssensoren angeordnet sind, jeweils durch einen stationären Positionsvektor $\vec{r_1} = (r_{xi}, r_{yi}, r_{zi})$ beschreiben lassen, der von einem Körperfesten Bezugspunkt zu der betreffenden Position $P_i$ zeigt, dass die Linearbeschleunigungssensoren jeweils eine sensitive Messachse aufweisen, die in Richtung eines Richtungsvektors $\vec{\Theta_i} = (\Theta_{xi}, \Theta_{yi}, \Theta_{zi})$ orientiert ist, wobei $i \in [1, 2, 3, 4, ... n]$ jeweils den betreffenden Linearbeschleunigungssensor und x, y, z durch den Bezugspunkt verlaufende Achsen eines Körperfesten Koordinatensystems bezeichnen, dass die Positionsvektoren $\vec{r_i}$ und die Richtungsvektoren $\vec{\Theta_i}$ derart gewählt sind, dass der Rang einer aus den Spaltenvektoren

$$\vec{S_1} = \begin{pmatrix} \Theta_{x1} \\ \Theta_{x2} \\ \Theta_{x3} \\ \Theta_{x4} \\ \vdots \\ \Theta_{xn} \end{pmatrix}, \quad \vec{S_2} = \begin{pmatrix} \Theta_{y1} \\ \Theta_{y2} \\ \Theta_{y3} \\ \Theta_{y4} \\ \vdots \\ \Theta_{yn} \end{pmatrix}, \quad \vec{S_3} = \begin{pmatrix} \Theta_{z1} \\ \Theta_{z2} \\ \Theta_{z3} \\ \Theta_{z4} \\ \vdots \\ \Theta_{zn} \end{pmatrix}, \quad \vec{S_4} = \begin{pmatrix} \Theta_{z1}r_{y1} - \Theta_{y1}r_{z1} \\ \Theta_{z2}r_{y2} - \Theta_{y2}r_{z2} \\ \Theta_{z3}r_{y3} - \Theta_{y3}r_{z3} \\ \Theta_{z4}r_{y4} - \Theta_{y4}r_{z4} \\ \vdots \\ \Theta_{zn}r_{yn} - \Theta_{yn}r_{zn} \end{pmatrix}, \quad \vec{S_5} = \begin{pmatrix} \Theta_{x1}r_{z1} - \Theta_{z1}r_{x1} \\ \Theta_{x2}r_{z2} - \Theta_{z2}r_{x2} \\ \Theta_{x3}r_{z3} - \Theta_{z3}r_{x3} \\ \Theta_{x4}r_{z4} - \Theta_{z4}r_{x4} \\ \vdots \\ \Theta_{xn}r_{zn} - \Theta_{zn}r_{xn} \end{pmatrix},$$

$$\vec{S_6} = \begin{pmatrix} \Theta_{y1}r_{x1} - \Theta_{x1}r_{y1} \\ \Theta_{y2}r_{x2} - \Theta_{x2}r_{y2} \\ \Theta_{y3}r_{x3} - \Theta_{x3}r_{y3} \\ \Theta_{y4}r_{x4} - \Theta_{x4}r_{y4} \\ \vdots \\ \Theta_{yn}r_{xn} - \Theta_{xn}r_{n4} \end{pmatrix}, \quad \vec{S_7} = \begin{pmatrix} -\Theta_{y1}r_{y1} - \Theta_{z1}r_{z1} \\ -\Theta_{y2}r_{y2} - \Theta_{z2}r_{z2} \\ -\Theta_{y3}r_{y3} - \Theta_{z3}r_{z3} \\ -\Theta_{y4}r_{y4} - \Theta_{z4}r_{z4} \\ \vdots \\ -\Theta_{yn}r_{yn} - \Theta_{zn}r_{zn} \end{pmatrix}, \quad \vec{S_8} = \begin{pmatrix} -\Theta_{x1}r_{x1} - \Theta_{z1}r_{z1} \\ -\Theta_{x2}r_{x2} - \Theta_{z2}r_{z2} \\ -\Theta_{x3}r_{x3} - \Theta_{z3}r_{z3} \\ -\Theta_{x4}r_{x4} - \Theta_{z4}r_{z4} \\ \vdots \\ -\Theta_{xn}r_{xn} - \Theta_{zn}r_{zn} \end{pmatrix},$$

$$\vec{S_9} = \begin{pmatrix} -\Theta_{x1}r_{x1} - \Theta_{y1}r_{y1} \\ -\Theta_{x2}r_{x2} - \Theta_{y2}r_{y2} \\ -\Theta_{x3}r_{x3} - \Theta_{y3}r_{y3} \\ -\Theta_{x4}r_{x4} - \Theta_{y4}r_{y4} \\ \vdots \\ -\Theta_{xn}r_{xn} - \Theta_{yn}r_{yn} \end{pmatrix}, \quad \vec{S_{10}} = \begin{pmatrix} \Theta_{y1}r_{x1} + \Theta_{x1}r_{y1} \\ \Theta_{y2}r_{x2} + \Theta_{x2}r_{y2} \\ \Theta_{y3}r_{x3} + \Theta_{x3}r_{y3} \\ \Theta_{y4}r_{x4} + \Theta_{x4}r_{y4} \\ \vdots \\ \Theta_{yn}r_{xn} + \Theta_{xn}r_{yn} \end{pmatrix}, \quad \vec{S_{11}} = \begin{pmatrix} \Theta_{z1}r_{x1} + \Theta_{x1}r_{z1} \\ \Theta_{z2}r_{x2} + \Theta_{x2}r_{z2} \\ \Theta_{z3}r_{x3} + \Theta_{x3}r_{z3} \\ \Theta_{z4}r_{x4} + \Theta_{x4}r_{z4} \\ \vdots \\ \Theta_{zn}r_{xn} + \Theta_{xn}r_{zn} \end{pmatrix}$$

und

$$\bar{s}_{12} = \begin{pmatrix} \Theta_{z1}r_{y1} + \Theta_{y1}r_{z1} \\ \Theta_{z2}r_{y2} + \Theta_{y2}r_{z2} \\ \Theta_{z3}r_{y3} + \Theta_{y3}r_{z3} \\ \Theta_{z4}r_{y4} + \Theta_{y4}r_{z4} \\ \vdots \\ \Theta_{zn}r_{yn} + \Theta_{yn}r_{zn} \end{pmatrix}$$

gebildeten zwölfspaltigen Matrix gleich zwölf ist, und dass die Linearbeschleunigungssensoren mit einer Auswerteeinrichtung verbunden sind, die zur Bildung eines Lage-, Geschwindigkeits- und/oder Beschleunigungs-Signals für den Körper aus dem Beschleunigungsmesssignal $\bar{a}$ und Kenngrößen, welche die relative Lage und Orientierung der Linearbeschleunigungssensoren in dem Körperfesten Koordinatensystem beschreiben, ausgebildet ist.

Wie bei dem Verfahren bereits erläutert wurde, können die Messachsen der mindestens zwölf Linearbeschleunigungssensoren auch beliebig schräg zueinander angeordnet sein, solange die aus den zwölf Spaltenvektoren $\bar{s}_1$, $\bar{s}_2$, $\bar{s}_3$, $\bar{s}_4$, $\bar{s}_5$, $\bar{s}_6$, $\bar{s}_7$, $\bar{s}_8$, $\bar{s}_9$, $\bar{s}_{10}$, $\bar{s}_{11}$, $\bar{s}_{12}$ gebildete Matrix linear unabhängig ist. Dennoch kann mit Hilfe der Vorrichtung das relative Lage-, Geschwindigkeits- und/oder Beschleunigungs-Signal mit großer Präzision ermittelt werden. Dies ist insbesondere von Vorteil, wenn es sich bei dem Körper um ein Kraftfahrzeug handelt, da nun die Linearbeschleunigungssensoren an geeigneten Plätzen im Kraftfahrzeug verbaut werden können. Dabei ist es sogar denkbar, dass im Fahrzeug bereits vorhandene Linearbeschleunigungssensoren, wie z.B. Airbagsensoren, für die erfindungsgemäße Vorrichtung genutzt werden.

Die Vorrichtung kann ein Teil eines inertialen Navigationssystems (INS) sein. Das Navigationssystem kann zusätzlich auch ein Global Positioning System (GPS) aufweisen, das mehrere die Erde umkreisende Satelliten bekannter Position aufweist. Das inertiale Navigationssystem kommt dabei bevorzugt dann zum Einsatz, wenn die GPS-Positionsbestimmung vorübergehend gestört ist, beispielsweise weil die freie Sicht auf die Satelliten durch ein Hindernis versperrt ist. Durch einen geeigneten mathematischen Filter, insbesondere einen Kalman, einen Extended Kalman und/ oder einen Partikel-Filter, kann das dynamische aber nicht langzeitstabile INS mit dem trägen, aber langzeitstabilen GPS verknüpft werden. Dies ermöglicht ein dynamisches und langzeitstabiles System mit besseren Eigenschaften als die entsprechenden Einzelsysteme. Außerdem ist eine Selbstkalibrierung online möglich.

Die Verwendung der erfindungsgemäßen Vorrichtung ist nicht auf den Automotivebereich beschränkt. Insbesondere kann die Vorrichtung auch in der Medizintechnik, in einem Luft-und/oder Wasserfahrzeug sowie bei allen anderen Anwendungen, bei denen die Messung der Lage und Bewegung eines Körpers im Raum von Bedeutung ist, zum Einsatz kommen.

Bei einer vorteilhaften Ausführungsform der Erfindung weist die Auswerteeinrichtung einen Datenspeicher auf, in dem mindestens ein Kenngrößensignal für einen Zeilenvektor einer Kenngrößenmatrix abgelegt ist, die zu einer zwölfspaltigen, die Spaltenvektoren $\bar{s}_1$, $\bar{s}_2$, $\bar{s}_3$, $\bar{s}_4$, $\bar{s}_5$, $\bar{s}_6$, $\bar{s}_7$, $\bar{s}_8$, $\bar{s}_9$, $\bar{s}_{10}$, $\bar{s}_{11}$, $\bar{s}_{12}$ aufweisenden Matrix invers ist. Dabei kann die Vorrichtung einen mit dem Datenspeicher verbundenen Mikroprozessor haben, in dem die Berechnung des relativen Lage-, Geschwindigkeits- und/oder Beschleunigungs-Signals erfolgt. Bevorzugt wird die Kenngrößenmatrix auf der Grundlage von Messwerten für die Lage und Ausrichtung der einzelnen Linearbeschleunigungssensoren relativ zu dem Körperfesten Koordinatensystem ermittelt. Selbstverständlich kann die Kenngrößenmatrix aber auch fest vorgegebenen werden, beispielsweise, wenn die Lage und Ausrichtung der einzelnen Linearbeschleunigungssensoren auf andere Weise als durch Messung bekannt ist.

Vorteilhaft ist, wenn die Auswerteeinrichtung Mittel zur Bildung wenigstens eines dem Skalarprodukt aus dem mindestens einen Kenngrößensignal und dem Beschleunigungsmesssignal $\bar{a}$ entsprechenden ersten Skalarproduktsignals aufweist, und wenn das mindestens eine Kenngrößensignal derart gewählt ist, dass das wenigstens eine erste Skalarproduktsignal einer vektoriellen Komponente der translatorischen Beschleunigung des Körpers entspricht. Dabei sind diese Mittel bevorzugt derart ausgestaltet, dass mit Hilfe der Vorrichtung für drei quer zueinander verlaufende Richtungen, wie z.B. den Richtungen der Achsen eines kartesischen Koordinatensystems, jeweils eine Komponente für die translatorische Beschleunigung des Körpers in Bezug zu dem Körperfesten Koordinatensystem bestimmt wird.

Bei einer bevorzugten Ausführungsform der Erfindung weist die Auswerteeinrichtung Mittel zur Bildung wenigstens eines, dem Skalarprodukt aus dem mindestens einen Kenngrößensignal und dem Beschleunigungsmesssignal $\bar{a}$ entsprechenden, zweiten Skalarproduktsignals auf, wobei das mindestens eine Kenngrößensignal derart gewählt ist, dass das zweite Skalarproduktsignal einer vektoriellen Komponente der Winkelbeschleunigung des Körpers entspricht. Dabei sind diese Mittel bevorzugt derart ausgestaltet, dass mit Hilfe der Vorrichtung für drei quer zueinander verlaufende Richtungen, wie z.B. den Richtungen der Achsen eines kartesischen Koordinatensystems, jeweils eine Komponente für die Winkelbeschleunigung des Körpers in Bezug zu dem Körperfesten Koordinatensystem bestimmt wird.

Bei einer zweckmäßigen Ausgestaltung der Erfindung weist die Auswerteeinrichtung Mittel zum gegebenenfalls zweifachen Integrieren des mindestens einen zweiten Skalarproduktsignals auf. Aus der Winkelbeschleunigung können dann die Winkelgeschwindigkeit und/oder die Drehlage des Körpers in Bezug zu einer Ausgangslage bestimmt werden. Die Vorrichtung kann dabei insbesondere zur Steuerung einer Sicherheitseinrichtung zum Schutz der Insassen eines Kraftfahrzeugs gegen Verletzungen bei einem Überschlag vorgesehen sein. Dabei kann die Vorrichtung insbesondere dazu dienen, den Winkel, den eine vorgegebene Fahrzeugachse, wie z.B. die Längsachse, in Bezug zur Richtung der Erdbeschleunigung aufweist, zu bestimmen, um die Sicherheitseinrichtung bei einem Überschlag zum richtigen Zeitpunkt auszulösen. Je nach dem, ob das Fahrzeug in einer Ebene oder an einem Berg steht, verschiebt sich der kritische Winkel, bei dem ein Überschlag unvermeidlich wird. Zum Entscheiden, welche Maßnahmen bei einem drohenden Überschlag getroffen werden sollen, ist auch die Position der Drehachse im Raum von großer Bedeutung. Befindet sich die Drehachse beispielsweise im Fahrzeuginneren, kann eine andere Sicherheitseinrichtung zum Einsatz kommen, als wenn sich die Drehachse außerhalb befindet. Gerade für eine Sicherheitseinrichtung in einem Kraftfahrzeug ist die Robustheit der Linearbeschleunigungssensoren vom Vorteil, da diese nicht bereits durch einen Aufprall vor dem eigentlichen Überschlag zerstört werden dürfen.

Bei einer vorteilhaften Ausführungsform der Erfindung weist die Auswerteeinrichtung Mittel zur Bildung wenigstens eines dem Skalarprodukt aus dem mindestens einen Kenngrößensignal und dem Beschleunigungsmesssignal a entsprechenden dritten Skalarproduktsignals auf, wobei das mindestens eine Kenngrößensignal derart gewählt ist, dass das dritte Skalarproduktsignal dem Quadrat einer vektoriellen Komponente der Winkelgeschwindigkeit des Körpers entspricht, und wobei die Auswerteeinrichtung Mittel zur Bildung eines Quadratwurzelsignals aus dem Skalarproduktsignal aufweist. Die Vorrichtung kann dann ein Messsignal für den Betrag der Winkelgeschwindigkeit des Körpers bereitstellen.

Vorteilhaft ist, wenn die Auswerteeinrichtung Mittel zur Bildung wenigstens eines dem Skalarprodukt aus dem mindestens einen Kenngrößensignal und dem Beschleunigungsmesssignal a entsprechenden vierten Skalarproduktsignals aufweist, wenn das mindestens eine Kenngrößensignal derart gewählt ist, dass das vierte Skalarproduktsignal dem Produkt zweier unterschiedlicher vektorieller Komponenten der Winkelgeschwindigkeit des Körpers entspricht, wenn die Auswerteeinrichtung Mittel zur Integration der für die betreffenden vektoriellen Komponente jeweils ermittelten zweiten Skalarproduktsignale und zur Bildung zumindest eines Produktsignals aus dem Ergebnissen dieser Integrationen aufweist, wenn die Auswerteeinrichtung eine Vergleichseinrichtung zum Vergleichen des Betrags dieses Produktsignals mit dem vierten Skalarproduktsignal aufweist, und wenn die Vergleichseinrichtung einen Ausgang für ein von dem Ergebnis des Vergleichs abhängiges Fehlerstatussignal hat. Das zweite und vierte Skalarproduktsignal werden also einer Plausibilitätsprüfung unterzogen. Wird dabei festgestellt, dass die entsprechenden Skalarproduktsignale nicht zueinander passen, kann das mit Hilfe der Vorrichtung ermittelte relative Lage-, Geschwindigkeits- und/oder Beschleunigungs-Signal verworfen und/oder das Auslösen einer mit der Vorrichtung in Steuerverbindung stehenden Sicherheitseinrichtung gesperrt werden.

Zweckmäßigerweise ist die Vergleichseinrichtung zum Vergleichen des Quadratwurzelsignals mit dem durch Integration des mindestens einen zweiten Skalarproduktsignals gebildeten Signals ausgestaltet und hat einen Ausgang für ein von dem Ergebnis des Vergleichs abhängiges Fehlerstatussignal. Die Plausibilität der Messergebnisse kann dann noch besser überprüft werden.

Vorteilhaft ist, wenn die Auswerteeinrichtung Mittel zur Integration des zweiten Skalarproduktsignal und zur Bildung des Quadrats aus dem Ergebnis dieses Integration aufweist, wenn diese Mittel zum Vergleichen des so erhaltenen Signals mit dem dritten Skalarproduktsignal mit der Vergleichseinrichtung verbunden ist, und wenn die Vergleichseinrichtung einen Ausgang für ein von dem Ergebnis des Vergleichs abhängiges Fehlerstatussignal hat. Es wird also die Plausibilität des zweiten und dritten Skalarproduktsignals überprüft.

Bei einer bevorzugten Ausgestaltung der Erfindung weist die Auswerteeinrichtung zum Differenzieren des Quadratwurzelsignals eine Differenziereinrichtung auf, wobei die Differenziereinrichtung zum Vergleichen des differenzierten Signals mit dem zweiten Skalarproduktsignal mit der Vergleichseinrichtung verbunden ist, und wobei die Vergleichseinrichtung einen Ausgang für ein von dem Ergebnis des Vergleichs abhängiges Fehlerstatussignal hat. Auch diese Maßnahme ermöglicht eine einfache und schnelle Plausibilitätsprüfung der Messergebnisse.

Nachfolgend ist ein Ausführungsbeispiel der Erfindung anhand der Zeichnung näher erläutert. Es zeigen:

Fig. 1a bis 1c      ein zwei Vektoren und eine Matrix aufweisendes Gleichungssystem für zwölf Linearbeschleunigungssensoren,

Fig. 2      eine schematische Darstellung eines in einem dreidimensionalen Raum in Richtung der drei Achsen u, v, w eines kartesischen Erdfesten Koordinatensystems verschiebbaren und um diese Achsen verdrehbaren Körpers,

Fig. 3      eine schematische Darstellung der Messachsen von an dem Körper an abgebrachten Linearbeschleunigungssensoren in einem Körperfesten Koordinatensystem mit den Achsen x, y und z,

Fig. 4          eine Tabelle, in der die Positionen der Linearbeschleunigungssensoren in den Koordinaten des Körperfesten kartesischen Koordinatensystems aufgeführt sind,

Fig. 5          eine Tabelle, in der die Richtungen, in denen die Linearbeschleunigungssensoren empfindlich sind, in den Koordinaten des Körperfesten kartesischen Koordinatensystems aufgeführt sind,

Fig. 6          die Matrix aus dem in Fig. 2 abgebildeten Gleichungssystem für die in Fig. 3 gezeigte Anordnung von Linearbeschleunigungssensoren,

Fig. 7          eine Matrix, die zu der in Fig. 6 abgebildeten Matrix invers ist,

Fig. 8          ein Vektorfeld, das Geschwindigkeitsvektoren für eine Bewegung eines Körpers enthält, die eine translatorische und eine rotatorische Komponente aufweist, wobei das Drehzentrum der rotatorischen Bewegung mit C bezeichnet ist, und

Fig. 9          ein Blockschaltbild einer Vorrichtung zur Bestimmung der Lage, Geschwindigkeit, Beschleunigung und/ oder des Drehzentrums eines Körpers in einem dreidimensionalen Raum.

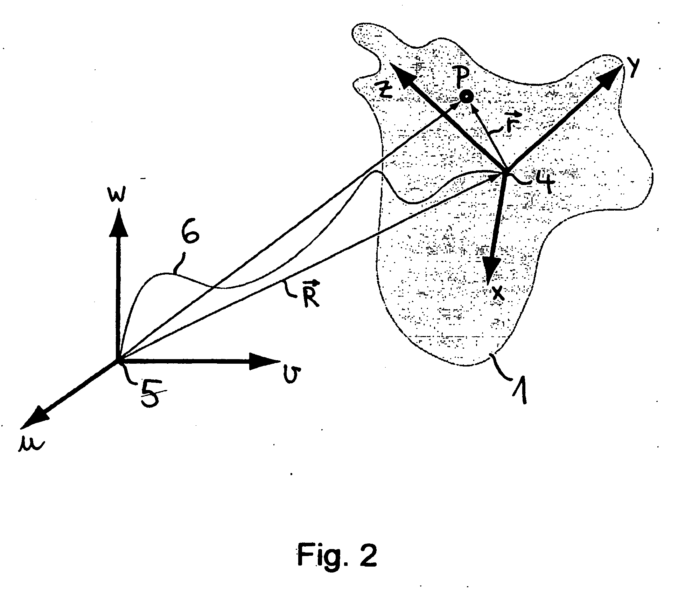

Eine Vorrichtung zur Bestimmung der relativen Lage, Geschwindigkeit, Beschleunigung und ggf. des Drehzentrums eines in einem dreidimensionalen, durch die Koordinaten u, v, w eines Raum- oder Erdfesten Koordinatensystems aufgespannten Raum (Fig. 2) angeordneten Körpers 1 hat zur Erfassung mindestens eines Beschleunigungsmesssignals a = ($a_1$, $a_2$, $a_3$, $a_4$, $a_5$, $a_6$, $a_7$, $a_8$, $a_9$, $a_{10}$, $a_{11}$, $a_{12}$) zwölf ortsfest in Bezug zu dem Körper 1 angeordnete Linearbeschleunigungssensoren 2, die jeweils in Richtung einer sensitiven Messachse 3 empfindlich sind. Der Körper 1 ist in dem Raum frei bewegbar, also entlang der Achsen u, v, w verschiebbar und um die Achsen u, v, w jeweils verdrehbar.

In Fig. 2 ist erkennbar, dass dem Körper ein Körperfestes kartesisches Koordinatensystem mit den Achsen x y und z und dem Ursprung 4 zugeordnet ist. Der Ursprung 5 des Raumfesten Koordinatensystems u, v, w ist mit dem Ursprung 4 des Körperfesten Koordinatensystems x y, z durch einen Vektor R verbunden. In Fig. 2 ist beispielhaft eine Bahnkurve 6 dargestellt, entlang welcher der Ursprung 4 des Körperfesten Koordinatensystems x y, z bewegt wurde. Außerdem ist ein von dem Ursprung 4 beabstandeter Punkt P des Körpers 1 abgebildet. Der Ursprung 4 ist durch einen Vektor r mit dem Punkt P verbunden.

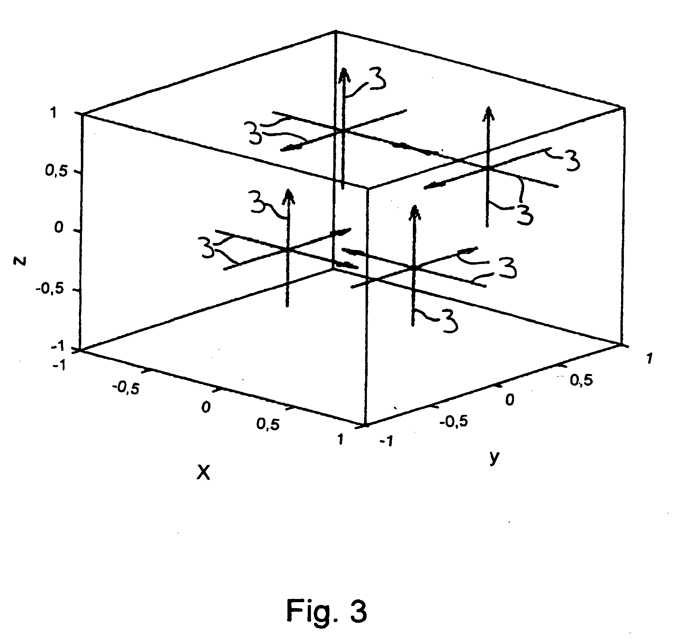

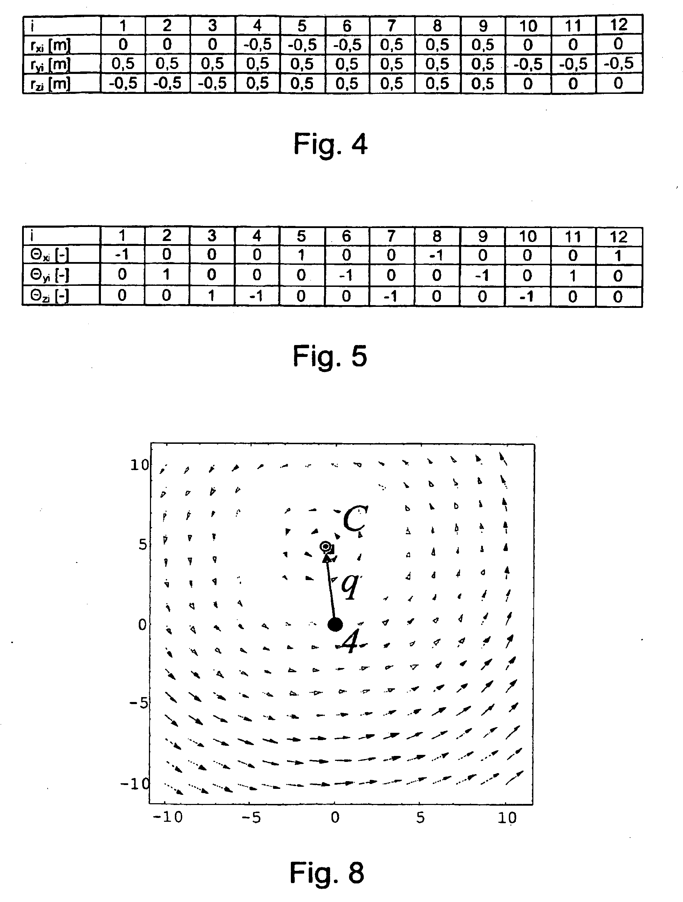

In Fig. 3 sind die Messachsen 3 der Linearbeschleunigungssensoren 2 in dem Körperfesten Koordinatensystem x y, z dargestellt. Die Koordinaten $r_{xi}$, $r_{yi}$, $r_{zi}$ der Positionsvektoren $\vec{r}_i$ und die Koordinaten $\Theta_{xi}$, $\Theta_{yi}$, $\Theta_{zi}$ der Richtungsvektoren $_i$ der Messachsen 3 sind jeweils in Fig. 4 aufgelistet. Dabei entspricht der Index i∈[1, 2, 3, 4, ... 12] der Nummer des betreffenden Linearbeschleunigungssensors 2. Die Positionsvektoren $\vec{r}_i$ und die Richtungsvektoren $\Theta_l$ werden bevorzugt durch Kalibration ermittelt.

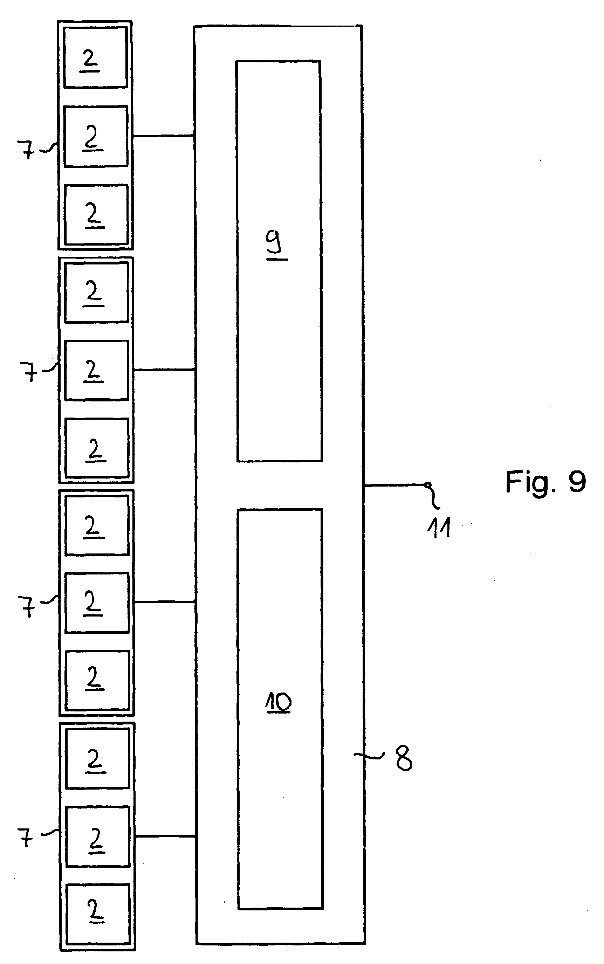

Aus Fig. 3 und der Tabelle in Fig. 4 ist ersichtlich, dass jeweils drei Linearbeschleunigungssensoren 2, deren Messachsen 3 in quer zueinander verlaufenden Richtungen orientiert sind, die nicht in einer Ebene angeordnet sind, an derselben Position angeordnet sind und einen multidirektionalen Beschleunigungssensor 7 (Fig. 9) bilden.

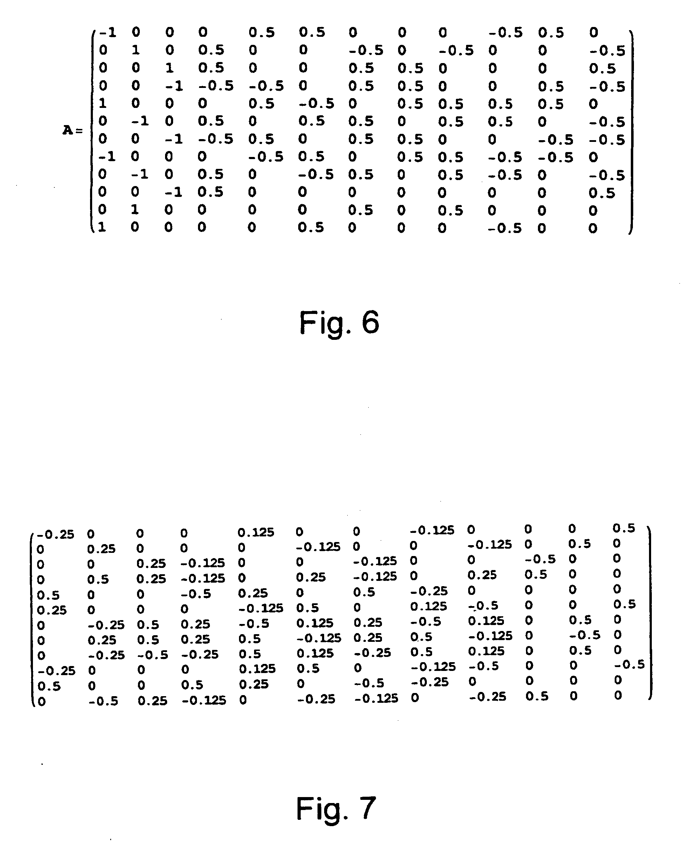

Setzt man die Koordinaten $r_{xi}$, $r_{yi}$, $r_{zi}$ der zwölf Positionsvektoren $\vec{r}_i$ und die Koordinaten $\Theta_{xi}$, $\Theta_{yi}$, $\Theta_{zi}$ der zwölf Richtungsvektoren $\Theta_i$ in die Matrix $\underline{A}$ des in Fig. 1a bis 1 c abgebildeten Gleichungssystems ein, so erhält man die in Fig. 6 dargestellte 12x12 Matrix Die Determinante dieser Matrix ist -16 und der Rang Rg($\underline{A}$) = 12. Damit ist die Bedingung erfüllt, dass die Spaltenvektoren der Matrix $\underline{A}$ linear unabhängig sind und die Matrix $\underline{A}$ somit in an sich bekannter Weise invertiert werden kann. Die invertierte, auf drei Kommastellen gerundete Matrix $\underline{A}^{-1}$, die nachstehend als Kenngrößenmatrix bezeichnet wird, ist in Fig. 7 abgebildet.

Mit Hilfe der Kenngrößenmatrix $\underline{A}^{-1}$ lässt sich nun nach Gleichung (8) der Vektor $\vec{W} = \left( A_x , A_y , A_z , \dot{\omega}_x , \dot{\omega}_y , \dot{\omega}_z , \omega_x^2 , \omega_y^2 , \omega_z^2 , \omega_x\omega_y , \omega_x\omega_z , \omega_y\omega_z \right)$ berechnen und somit die translatorische Beschleunigung $\vec{A}$ =($A_x$, $A_y$, $A_z$), die rotatorische Beschleunigung $\dot{\vec{\omega}} = \left( \dot{\omega}_x , \dot{\omega}_y , \dot{\omega}_z \right)$, die Quadrate der auf die Körperfesten Achsen x, y, z bezogenen Winkelgeschwindigkeiten $\omega_x^2 , \omega_y^2 , \omega_z^2$ des Körpers 1 und Mischterme, die jeweils dem Produkt zweier unterschiedlicher vektorieller Komponenten $\omega_x^2 , \omega_y^2 , \omega_z^2$ der Winkelgeschwindigkeit des Körpers 1 entsprechen, auf einfache Weise bestimmen.

Um den Drehpunkt eines Körpers bestimmen zu können müssen die Translationsgeschwindigkeit $\vec{A}$ und die Rotation $\omega$ bekannt sein. Der Drehpunkt ermittelt sich dann, indem man den Punkt sucht, an dem der Betrag der Geschwindigkeit verschwindet. Die Herleitung der Geschwindigkeit erfolgt Mithilfe der Superposition von der Translationsgeschwindigkeit $\dot{R}=v$ und der Rotationsgeschwindigkeit $\omega \times r$. Damit die Geschwindigkeit verschwindet muss die Gleichung w x q = -v erfüllt sein, wobei q den Drehpunkt darstellt. Somit ergibt sich für den Drehpunkt $q = \omega \times v^{\perp} / \|\omega\|_2^2$

mit $v^{\perp} = v - (\omega v)\omega / \|\omega\|_2^2$. In Fig. 8 ist ein Vektorfeld des bewegten Körpers 1 mit dem Drehpunkt C abgebildet. Die Translationsgeschwindigkeit beträgt $v_x = 5$ und $v_y = 1$ und die Rotation w = 1.

In Fig. 9 ist erkennbar, dass die einzelnen Linearbeschleunigungssensoren 2 zur Berechnung des Vektors w und der Koordinaten des Drehpunkts C mit einer Auswerteeinrichtung 8 verbunden sind. Die Auswerteeinrichtung weist einen Datenspeicher 9 und einen Mikroprozessor 10 auf, der über einen in der Zeichnung nicht näher dargestelltes Bussystem mit dem Datenspeicher 9 verbunden ist. In dem Datenspeicher 9 ist die Kenngrößenmatrix $A^{-1}$ abgelegt. Zur Berechnung der einzelnen Komponenten des Vektors

$$\bar{w} = \left(A_x, A_y, A_z, \dot{\omega}_x, \dot{\omega}_y, \dot{\omega}_z, \omega_x^2, \omega_y^2, \omega_z^2, \omega_x\omega_y, \omega_x\omega_z, \omega_y\omega_z\right)$$ bildet der Mikroprozessor 10 jeweils das Skalarprodukt aus den einzelnen Zellenvektoren der Kenngrößenmatrix $A^{-1}$ und dem mit Hilfe der Linearbeschleunigungssensoren 2 gemessenen Beschleunigungsmesssignal $a = (a_1, a_2, a_3, a_4, ... a_n)$. Der Vektor

$$\bar{w} = \left(A_x, A_y, A_z, \dot{\omega}_x, \dot{\omega}_y, \dot{\omega}_z, \omega_x^2, \omega_y^2, \omega_z^2, \omega_x\omega_y, \omega_x\omega_z, \omega_y\omega_z\right)$$ und der Drehpunkts C werden in Form eines entsprechenden Ausgangssignals an einem Messsignalausgang 11 bereitgestellt.

Bei dem Verfahren zur Bestimmung der relativen Lage, Geschwindigkeit, Beschleunigung und/oder des Drehzentrums eines In einem dreidimensionalen Raum bewegbaren Körpers 1 werden also mindestens zwölf Linearbeschleunigungssensoren 2 bereitgestellt und jeweils an einer zu dem Körper 1 ortsfesten Position angeordnet. Mit Hilfe der Linearbeschleunigungssensoren 2 wird mindestens ein Beschleunigungsmesssignal erfasst. Aus dem Beschleunigungsmesssignal und Kenngrößen, welche die Lage und Orientierung der Linearbeschleunigungssensoren 2 in dem Körperfesten Koordinatensystem beschreiben, wird ein Lage-, Geschwindigkeits-, Beschleunigungs- und/oder Drehzentrum-Signal für den Körper 1 gebildet.

## Patentansprüche

1. Verfahren zur Bestimmung der relativen Lage, Geschwindigkeit und/oder Beschleunigung eines in einem dreidimensionalen Raum bewegbaren Körpers (1), wobei eine Anzahl von n Linearbeschleunigungssensoren (2), die jeweils eine sensitive Messachse (3) haben, bereitgestellt wird, wobei die Anzahl n mindestens zwölf beträgt, wobei die einzelnen Linearbeschleunigungssensoren (2) jeweils an einer zu dem Körper (1) ortsfesten Position $P_i$ angeordnet werden, die sich durch einen stationären Positionsvektor $\vec{r}_i = \begin{pmatrix} r_{xi} \\ r_{yi} \\ r_{zi} \end{pmatrix}$ beschreiben lässt, der von einem Körperfesten Bezugspunkt (4) zu der betreffenden Position $P_i$ zeigt, wobei die Linearbeschleunigungssensoren (2) derart ausgerichtet werden, dass ihre Messachse (3) jeweils in Richtung eines Richtungsvektors $\vec{\Theta}_i = \begin{pmatrix} \Theta_{xi} \\ \Theta_{yi} \\ \Theta_{zi} \end{pmatrix}$ orientiert ist, wobei $i \in [1, 2, 3, 4, ... n]$ jeweils den betreffenden Linearbeschleunigungssensor (2) und x, y, z durch den Bezugspunkt (4) verlaufende Achsen eines Körperfesten Koordinatensystems bezeichnen, wobei die Positionsvektoren $r_i$ und die Richtungsvektoren $\Theta_i$ derart gewählt werden, dass der Rang einer aus den Spaltenvektoren

$$\vec{s}_1 = \begin{pmatrix} \Theta_{x1} \\ \Theta_{x2} \\ \Theta_{x3} \\ \Theta_{x4} \\ \vdots \\ \Theta_{xn} \end{pmatrix}, \quad \vec{s}_2 = \begin{pmatrix} \Theta_{y1} \\ \Theta_{y2} \\ \Theta_{y3} \\ \Theta_{y4} \\ \vdots \\ \Theta_{yn} \end{pmatrix}, \quad \vec{s}_3 = \begin{pmatrix} \Theta_{z1} \\ \Theta_{z2} \\ \Theta_{z3} \\ \Theta_{z4} \\ \vdots \\ \Theta_{zn} \end{pmatrix},$$

$$\vec{s}_4 = \begin{pmatrix} \Theta_{z1}r_{y1} - \Theta_{y1}r_{z1} \\ \Theta_{z2}r_{y2} - \Theta_{y2}r_{z2} \\ \Theta_{z3}r_{y3} - \Theta_{y3}r_{z3} \\ \Theta_{z4}r_{y4} - \Theta_{y4}r_{z4} \\ \vdots \\ \Theta_{zn}r_{yn} - \Theta_{yn}r_{zn} \end{pmatrix}, \quad \vec{s}_5 = \begin{pmatrix} \Theta_{x1}r_{z1} - \Theta_{z1}r_{x1} \\ \Theta_{x2}r_{z2} - \Theta_{z2}r_{x2} \\ \Theta_{x3}r_{z3} - \Theta_{z3}r_{x3} \\ \Theta_{x4}r_{z4} - \Theta_{z4}r_{x4} \\ \vdots \\ \Theta_{xn}r_{zn} - \Theta_{zn}r_{xn} \end{pmatrix}, \quad \vec{s}_6 = \begin{pmatrix} \Theta_{y1}r_{x1} - \Theta_{x1}r_{y1} \\ \Theta_{y2}r_{x2} - \Theta_{x2}r_{y2} \\ \Theta_{y3}r_{x3} - \Theta_{x3}r_{y3} \\ \Theta_{y4}r_{x4} - \Theta_{x4}r_{y4} \\ \vdots \\ \Theta_{yn}r_{xn} - \Theta_{xn}r_{n4} \end{pmatrix},$$

$$\vec{s}_7 = \begin{pmatrix} -\Theta_{y1}r_{y1} - \Theta_{z1}r_{z1} \\ -\Theta_{y2}r_{y2} - \Theta_{z2}r_{z2} \\ -\Theta_{y3}r_{y3} - \Theta_{z3}r_{z3} \\ -\Theta_{y4}r_{y4} - \Theta_{z4}r_{z4} \\ \vdots \\ -\Theta_{yn}r_{yn} - \Theta_{zn}r_{zn} \end{pmatrix}, \quad \vec{s}_8 = \begin{pmatrix} -\Theta_{x1}r_{x1} - \Theta_{z1}r_{z1} \\ -\Theta_{x2}r_{x2} - \Theta_{z2}r_{z2} \\ -\Theta_{x3}r_{x3} - \Theta_{z3}r_{z3} \\ -\Theta_{x4}r_{x4} - \Theta_{z4}r_{z4} \\ \vdots \\ -\Theta_{xn}r_{xn} - \Theta_{zn}r_{zn} \end{pmatrix}, \quad \vec{s}_9 = \begin{pmatrix} -\Theta_{x1}r_{x1} - \Theta_{y1}r_{y1} \\ -\Theta_{x2}r_{x2} - \Theta_{y2}r_{y2} \\ -\Theta_{x3}r_{x3} - \Theta_{y3}r_{y3} \\ -\Theta_{x4}r_{x4} - \Theta_{y4}r_{y4} \\ \vdots \\ -\Theta_{xn}r_{xn} - \Theta_{yn}r_{yn} \end{pmatrix},$$

$$\vec{s}_{10} = \begin{pmatrix} \Theta_{y1}r_{x1} + \Theta_{x1}r_{y1} \\ \Theta_{y2}r_{x2} + \Theta_{x2}r_{y2} \\ \Theta_{y3}r_{x3} + \Theta_{x3}r_{y3} \\ \Theta_{y4}r_{x4} + \Theta_{x4}r_{y4} \\ \vdots \\ \Theta_{yn}r_{xn} + \Theta_{xn}r_{yn} \end{pmatrix}, \quad \vec{s}_{11} = \begin{pmatrix} \Theta_{z1}r_{x1} + \Theta_{x1}r_{z1} \\ \Theta_{z2}r_{x2} + \Theta_{x2}r_{z2} \\ \Theta_{z3}r_{x3} + \Theta_{x3}r_{z3} \\ \Theta_{z4}r_{x4} + \Theta_{x4}r_{z4} \\ \vdots \\ \Theta_{zn}r_{xn} + \Theta_{xn}r_{zn} \end{pmatrix} \quad \text{und} \quad \vec{s}_{12} = \begin{pmatrix} \Theta_{z1}r_{y1} + \Theta_{y1}r_{z1} \\ \Theta_{z2}r_{y2} + \Theta_{y2}r_{z2} \\ \Theta_{z3}r_{y3} + \Theta_{y3}r_{z3} \\ \Theta_{z4}r_{y4} + \Theta_{y4}r_{z4} \\ \vdots \\ \Theta_{zn}r_{yn} + \Theta_{yn}r_{zn} \end{pmatrix}$$

gebildeten zwölfspaltigen Matrix gleich zwölf ist, wobei mit Hilfe der Linearbeschleunigungssensoren (2) mindestens ein Beschleunigungsmesssignal $\vec{a} = \begin{pmatrix} a_1 \\ a_2 \\ a_3 \\ a_4 \\ \vdots \\ a_n \end{pmatrix}$ erfasst wird, und wobei aus dem Beschleunigungsmesssignal und Kenngrößen, welche die relative Lage und Orientierung der Linearbeschleunigungssensoren (2) in dem Körperfesten Koordinatensystem beschreiben, ein Lage-, Geschwindigkeits- und/oder Beschleunigungs-Signal für den Körper (1) gebildet wird.

2. Verfahren nach Anspruch 1, **dadurch gekennzeichnet, dass** nach dem Anordnen der Linearbeschleunigungssensoren (2) an den Positionen $P_i$ mindestens fünf Messungen durchgeführt werden, bei denen der Körper (1) in Bezug zu einem Erdfesten Koordinatensystem in unterschiedliche, bekannte Richtungen linear und/oder um mindestens ein bekanntes Drehzentrum beschleunigt wird, dass bei jeder Messung jeweils ein Beschleunigungsmesssignal

$$\bar{a}_k = \begin{pmatrix} a_{1k} \\ a_{2k} \\ a_{3k} \\ a_{4k} \\ \vdots \\ a_{nk} \end{pmatrix}$$

erfasst wird, und dass aus den Beschleunigungsmesssignalen $\vec{a}_k$ und den Richtungen und/ oder dem mindestens einen Drehzentrum die Kenngrößen für die Lage und Orientierung der Linearbeschleunigungssensoren(2) bestimmt werden.

3. Verfahren nach Anspruch 1 oder 2, **dadurch gekennzeichnet, dass** aus dem Geschwindigkeits-Signal die relative Lage eines Drehzentrums ermittelt wird, um das sich der Köper in dem Raum dreht.

4. Vorrichtung zur Bestimmung der relativen Lage, Geschwindigkeit und/oder Beschleunigung eines in einem dreidimensionalen Raum bewegbaren Körpers (1), wobei die Vorrichtung zur Erfassung mindestens eines Beschleunigungsmesssignals

$$\bar{a} = \begin{pmatrix} a_1 \\ a_2 \\ a_3 \\ a_4 \\ \vdots \\ a_n \end{pmatrix}$$

eine Anzahl von n ortsfest in Bezug zu dem Körper (1) angeordneten Linearbeschleunigungssensoren (2) aufweist, wobei die Anzahl n mindestens zwölf beträgt, wobei sich die Positionen $P_i$, an denen die Linearbeschleunigungssensoren (2) angeordnet sind, jeweils durch einen stationären Positionsvektor

$$\bar{r}_i = \begin{pmatrix} r_{xi} \\ r_{yi} \\ r_{zi} \end{pmatrix}$$

beschreiben lassen, der von einem Körperfesten Bezugspunkt (4) zu der betreffenden Position $P_i$ zeigt, wobei die Linearbeschleunigungssensoren (2) jeweils eine sensitive Messachse (3) aufweisen, die in Richtung eines

Richtungsvektors $\bar{\Theta}_i = \begin{pmatrix} \Theta_{xi} \\ \Theta_{yi} \\ \Theta_{zi} \end{pmatrix}$ orientiert ist, wobei $i \in [1, 2, 3, 4, ... n]$ jeweils den betreffenden Linearbeschleunigungssensor (2) und x, y, z durch den Bezugspunkt (4) verlaufende Achsen eines Körperfesten Koordinatensystems bezeichnen, wobei die Positionsvektoren $\vec{r}_i$ und die Richtungsvektoren $\vec{\Theta}_i$ derart gewählt sind, dass der Rang einer aus den Spaltenvektoren $\vec{s}_1 = \begin{pmatrix} \Theta_{x1} \\ \Theta_{x2} \\ \Theta_{x3} \\ \Theta_{x4} \\ \vdots \\ \Theta_{xn} \end{pmatrix}$ , $\vec{s}_2 = \begin{pmatrix} \Theta_{y1} \\ \Theta_{y2} \\ \Theta_{y3} \\ \Theta_{y4} \\ \vdots \\ \Theta_{yn} \end{pmatrix}$ , $\vec{s}_3 = \begin{pmatrix} \Theta_{z1} \\ \Theta_{z2} \\ \Theta_{z3} \\ \Theta_{z4} \\ \vdots \\ \Theta_{zn} \end{pmatrix}$ ,

$$\bar{s}_4 = \begin{pmatrix} \Theta_{z1}r_{y1} - \Theta_{y1}r_{z1} \\ \Theta_{z2}r_{y2} - \Theta_{y2}r_{z2} \\ \Theta_{z3}r_{y3} - \Theta_{y3}r_{z3} \\ \Theta_{z4}r_{y4} - \Theta_{y4}r_{z4} \\ \vdots \\ \Theta_{zn}r_{yn} - \Theta_{yn}r_{zn} \end{pmatrix}, \quad \bar{s}_5 = \begin{pmatrix} \Theta_{x1}r_{z1} - \Theta_{z1}r_{x1} \\ \Theta_{x2}r_{z2} - \Theta_{z2}r_{x2} \\ \Theta_{x3}r_{z3} - \Theta_{z3}r_{x3} \\ \Theta_{x4}r_{z4} - \Theta_{z4}r_{x4} \\ \vdots \\ \Theta_{xn}r_{zn} - \Theta_{zn}r_{xn} \end{pmatrix}, \quad \bar{s}_6 = \begin{pmatrix} \Theta_{y1}r_{x1} - \Theta_{x1}r_{y1} \\ \Theta_{y2}r_{x2} - \Theta_{x2}r_{y2} \\ \Theta_{y3}r_{x3} - \Theta_{x3}r_{y3} \\ \Theta_{y4}r_{x4} - \Theta_{x4}r_{y4} \\ \vdots \\ \Theta_{yn}r_{xn} - \Theta_{xn}r_{n4} \end{pmatrix},$$

$$\bar{s}_7 = \begin{pmatrix} -\Theta_{y1}r_{y1} - \Theta_{z1}r_{z1} \\ -\Theta_{y2}r_{y2} - \Theta_{z2}r_{z2} \\ -\Theta_{y3}r_{y3} - \Theta_{z3}r_{z3} \\ -\Theta_{y4}r_{y4} - \Theta_{z4}r_{z4} \\ \vdots \\ -\Theta_{yn}r_{yn} - \Theta_{zn}r_{zn} \end{pmatrix}, \quad \bar{s}_8 = \begin{pmatrix} -\Theta_{x1}r_{x1} - \Theta_{z1}r_{z1} \\ -\Theta_{x2}r_{x2} - \Theta_{z2}r_{z2} \\ -\Theta_{x3}r_{x3} - \Theta_{z3}r_{z3} \\ -\Theta_{x4}r_{x4} - \Theta_{z4}r_{z4} \\ \vdots \\ -\Theta_{xn}r_{xn} - \Theta_{zn}r_{zn} \end{pmatrix}, \quad \bar{s}_9 = \begin{pmatrix} -\Theta_{x1}r_{x1} - \Theta_{y1}r_{y1} \\ -\Theta_{x2}r_{x2} - \Theta_{y2}r_{y2} \\ -\Theta_{x3}r_{x3} - \Theta_{y3}r_{y3} \\ -\Theta_{x4}r_{x4} - \Theta_{y4}r_{y4} \\ \vdots \\ -\Theta_{xn}r_{xn} - \Theta_{yn}r_{yn} \end{pmatrix},$$

$$\bar{s}_{10} = \begin{pmatrix} \Theta_{y1}r_{x1} + \Theta_{x1}r_{y1} \\ \Theta_{y2}r_{x2} + \Theta_{x2}r_{y2} \\ \Theta_{y3}r_{x3} + \Theta_{x3}r_{y3} \\ \Theta_{y4}r_{x4} + \Theta_{x4}r_{y4} \\ \vdots \\ \Theta_{yn}r_{xn} + \Theta_{xn}r_{yn} \end{pmatrix}, \quad \bar{s}_{11} = \begin{pmatrix} \Theta_{z1}r_{x1} + \Theta_{x1}r_{z1} \\ \Theta_{z2}r_{x2} + \Theta_{x2}r_{z2} \\ \Theta_{z3}r_{x3} + \Theta_{x3}r_{z3} \\ \Theta_{z4}r_{x4} + \Theta_{x4}r_{z4} \\ \vdots \\ \Theta_{zn}r_{xn} + \Theta_{xn}r_{zn} \end{pmatrix} \quad \text{und} \quad \bar{s}_{12} = \begin{pmatrix} \Theta_{z1}r_{y1} + \Theta_{y1}r_{z1} \\ \Theta_{z2}r_{y2} + \Theta_{y2}r_{z2} \\ \Theta_{z3}r_{y3} + \Theta_{y3}r_{z3} \\ \Theta_{z4}r_{y4} + \Theta_{y4}r_{z4} \\ \vdots \\ \Theta_{zn}r_{yn} + \Theta_{yn}r_{zn} \end{pmatrix}$$

gebildeten zwölfspaltigen Matrix gleich zwölf ist, und wobei die Linearbeschleunigungssensoren (2) mit einer Auswerteeinrichtung (8) verbunden sind, die zur Bildung eines Lage-, Geschwindigkeits- und/oder Beschleunigungs-Signals für den Körper (1) aus dem Beschleunigungsmesssignal a und Kenngrößen, welche die relative Lage und Orientierung der Linearbeschleunigungssensoren (2) in dem Körperfesten Koordinatensystem beschreiben, ausgebildet ist.

5. Vorrichtung nach Anspruch 4, **dadurch gekennzeichnet, dass** die Auswerteeinrichtung einen Datenspeicher (9) aufweist, in dem mindestens ein Kenngrößensignal für einen Zeilenvektor einer Kenngrößenmatrix abgelegt ist, die zu einer zwölfspaltigen, die Spaltenvektoren $s_1, s_2, s_3, s_4, s_5, s_6, s_7, s_8, s_9, s_{10}, s_{11}, s_{12}$ aufweisenden Matrix invers ist.

6. Vorrichtung nach Anspruch 5, **dadurch gekennzeichnet, dass** die Auswerteeinrichtung (8) Mittel zur Bildung wenigstens eines dem Skalarprodukt aus dem mindestens einen Kenngrößensignal und dem Beschleunigungsmesssignal a entsprechenden ersten Skalarproduktsignals aufweist, und dass das mindestens eine Kenngrößensignal derart gewählt ist, dass das wenigstens eine erste Skalarproduktsignal einer vektoriellen Komponente der translatorischen Beschleunigung des Körpers (1) entspricht.

7. Vorrichtung nach Anspruch 5 oder 6, **dadurch gekennzeichnet, dass** die Auswerteeinrichtung (8) Mittel zur Bildung wenigstens eines dem Skalarprodukt aus dem mindestens einen Kenngrößensignal und dem Beschleunigungsmesssignal a entsprechenden zweiten Skalarproduktsignals aufweist, und dass das mindestens eine Kenngrößensignal derart gewählt ist, dass das zweite Skalarproduktsignal einer vektoriellen Komponente der Winkelbeschleunigung des Körpers (1) entspricht.

8. Vorrichtung nach einem der Ansprüche 5 bis 7, **dadurch gekennzeichnet, dass** die Auswerteeinrichtung (8) Mittel zum gegebenenfalls zweifachen Integrieren des mindestens einen zweiten Skalarproduktsignals aufweist.

9. Vorrichtung nach Anspruch 5 bis 8, **dadurch gekennzeichnet, dass** die Auswerteeinrichtung (8) Mittel zur Bildung wenigstens eines dem Skalarprodukt aus dem mindestens einen Kenngrößensignal und dem Beschleunigungs-messsignal $\vec{a}$ entsprechenden dritten Skalarproduktsignals aufweist, dass das mindestens eine Kenngrößensignal derart gewählt ist, dass das dritte Skalarproduktsignal dem Quadrat einer vektoriellen Komponente der Winkelgeschwindigkeit des Körpers (1) entspricht, und dass die Auswerteeinrichtung (8) Mittel zur Bildung eines Quadratwurzelsignals aus dem Skalarproduktsignal aufweist.

10. Vorrichtung nach einem der Ansprüche 5 bis 9, **dadurch gekennzeichnet, dass** die Auswerteeinrichtung (8) Mittel zur Bildung wenigstens eines dem Skalarprodukt aus dem mindestens einen Kenngrößensignal und dem Beschleunigungsmesssignal $\vec{a}$ entsprechenden vierten Skalarproduktsignals aufweist, dass das mindestens eine Kenngrößensignal derart gewählt ist, dass das vierte Skalarproduktsignal dem Produkt zweier unterschiedlicher vektorieller Komponenten der Winkelgeschwindigkeit des Körpers (1) entspricht, dass die Auswerteeinrichtung (8) Mittel zur Integration der für die betreffenden vektoriellen Komponente jeweils ermittelten zweiten Skalarproduktsignale und zur Bildung zumindest eines Produktsignals aus dem Ergebnissen dieser Integrationen aufweist dass die Auswerteinrichtung (8) eine Vergleichseinrichtung zum Vergleichen des Betrags dieses Produktsignals mit dem vierten Skalarproduktsignal aufweist, und dass die Vergleichseinrichtung einen Ausgang für ein von dem Ergebnis des Vergleichs abhängiges Fehlerstatussignal hat.

11. Vorrichtung nach Anspruch 5 bis 10, **dadurch gekennzeichnet, dass** die Vergleichseinrichtung zum Vergleichen des Quadratwurzelsignals mit dem durch Integration des mindestens einen zweiten Skalarproduktsignals gebildeten Signals ausgestaltet ist, und dass die Vergleichseinrichtung einen Ausgang für ein von dem Ergebnis des Vergleichs abhängiges Fehlerstatussignal hat.

12. Vorrichtung nach Anspruch 5 bis 11, **dadurch gekennzeichnet, dass** die Auswerteeinrichtung Mittel zur Integration des zweiten Skalarproduktsignal und zur Bildung des Quadrats aus dem Ergebnis dieses Integration aufweist, dass diese Mittel zum Vergleichen des so erhaltenen Signals mit dem dritten Skalarproduktsignal mit der Vergleichseinrichtung verbunden ist, und dass die Vergleichseinrichtung einen Ausgang für ein von dem Ergebnis des Vergleichs abhängiges Fehlerstatussignal hat.

13. Vorrichtung nach Anspruch 5 bis 12, **dadurch gekennzeichnet, dass** die Auswerteeinrichtung zum Differenzieren des Quadratwurzelsignals eine Differenziereinrichtung aufweist, dass die Differenziereinrichtung zum Vergleichen des differenzierten Signals mit dem zweiten Skalarproduktsignal mit der Vergleichseinrichtung verbunden ist, und dass die Vergleichseinrichtung einen Ausgang für ein von dem Ergebnis des Vergleichs abhängiges Fehlerstatussignal hat.

14. Vorrichtung nach Anspruch 4 bis 12, **dadurch gekennzeichnet, dass** die Auswerteeinrichtung (8) derart ausgestaltet ist, dass sie bei einer Drehbewegung des Körpers um ein Drehzentrum aus dem Geschwindigkeits-Signal ein Signal für die relative Lage eines Drehzentrums ermittelt.

15. Vorrichtung nach einem der Ansprüche 4 bis 14, **dadurch gekennzeichnet, dass** sie den Körper (1) umfasst und dass der Körper (1) ein Kraftfahrzeug ist.


**Claims**

1.

Method for determining the relative position, velocity, and/or acceleration of a body (1) displaceable in a three dimensional space, wherein a plurality of n linear acceleration sensors (2), which in each case have a sensitive measurement axis (3), is provided, wherein said plurality n is at least twelve, wherein the individual linear acceleration sensors (2) are in each case arranged on a position $P_i$ which is stationarily fixed with respect to the body (1) and which can be described by a stationary position vector, $\vec{r_i} = \begin{pmatrix} r_{xi} \\ r_{yi} \\ r_{zi} \end{pmatrix}$ which indicates the respective position $P_i$ from

a body-fixed reference point (4), wherein the linear acceleration sensors (2) are aligned so that their measurement axes (3) are always oriented toward a direction vector $\vec{\Theta}_i = \begin{pmatrix} \Theta_{xi} \\ \Theta_{yi} \\ \Theta_{zi} \end{pmatrix}$, wherein the respective linear acceleration sensor (2) and the x, y, z axes of a body-fixed coordinate system passing through the reference point (4) are designated in each case by $i \in [1, 2, 3, 4, \ldots n]$, wherein the position vectors $\vec{r}_i$ and the direction vectors $\Theta_i$ are selected so that the rank of a twelve column matrix formed from the column vectors

$$\vec{s}_1 = \begin{pmatrix} \Theta_{x1} \\ \Theta_{x2} \\ \Theta_{x3} \\ \Theta_{x4} \\ \vdots \\ \Theta_{xn} \end{pmatrix}, \; \vec{s}_2 = \begin{pmatrix} \Theta_{y1} \\ \Theta_{y2} \\ \Theta_{y3} \\ \Theta_{y4} \\ \vdots \\ \Theta_{yn} \end{pmatrix}, \; \vec{s}_3 = \begin{pmatrix} \Theta_{z1} \\ \Theta_{z2} \\ \Theta_{z3} \\ \Theta_{z4} \\ \vdots \\ \Theta_{zn} \end{pmatrix},$$

$$\vec{s}_4 = \begin{pmatrix} \Theta_{z1}r_{y1} - \Theta_{y1}r_{z1} \\ \Theta_{z2}r_{y2} - \Theta_{y2}r_{z2} \\ \Theta_{z3}r_{y3} - \Theta_{y3}r_{z3} \\ \Theta_{z4}r_{y4} - \Theta_{y4}r_{z4} \\ \vdots \\ \Theta_{zn}r_{yn} - \Theta_{yn}r_{zn} \end{pmatrix}, \; \vec{s}_5 = \begin{pmatrix} \Theta_{x1}r_{z1} - \Theta_{z1}r_{x1} \\ \Theta_{x2}r_{z2} - \Theta_{z2}r_{x2} \\ \Theta_{x3}r_{z3} - \Theta_{z3}r_{x3} \\ \Theta_{x4}r_{z4} - \Theta_{z4}r_{x4} \\ \vdots \\ \Theta_{xn}r_{zn} - \Theta_{zn}r_{xn} \end{pmatrix}, \; \vec{s}_6 = \begin{pmatrix} \Theta_{y1}r_{x1} - \Theta_{x1}r_{y1} \\ \Theta_{y2}r_{x2} - \Theta_{x2}r_{y2} \\ \Theta_{y3}r_{x3} - \Theta_{x3}r_{y3} \\ \Theta_{y4}r_{x4} - \Theta_{x4}r_{y4} \\ \vdots \\ \Theta_{yn}r_{xn} - \Theta_{xn}r_{yn} \end{pmatrix},$$

$$\vec{s}_7 = \begin{pmatrix} -\Theta_{y1}r_{y1} - \Theta_{z1}r_{z1} \\ -\Theta_{y2}r_{y2} - \Theta_{z2}r_{z2} \\ -\Theta_{y3}r_{y3} - \Theta_{z3}r_{z3} \\ -\Theta_{y4}r_{y4} - \Theta_{z4}r_{z4} \\ \vdots \\ -\Theta_{yn}r_{yn} - \Theta_{zn}r_{zn} \end{pmatrix}, \; \vec{s}_8 = \begin{pmatrix} -\Theta_{x1}r_{x1} - \Theta_{z1}r_{z1} \\ -\Theta_{x2}r_{x2} - \Theta_{z2}r_{z2} \\ -\Theta_{x3}r_{x3} - \Theta_{z3}r_{z3} \\ -\Theta_{x4}r_{x4} - \Theta_{z4}r_{z4} \\ \vdots \\ -\Theta_{xn}r_{xn} - \Theta_{zn}r_{zn} \end{pmatrix}, \; \vec{s}_9 = \begin{pmatrix} -\Theta_{x1}r_{x1} - \Theta_{y1}r_{y1} \\ -\Theta_{x2}r_{x2} - \Theta_{y2}r_{y2} \\ -\Theta_{x3}r_{x3} - \Theta_{y3}r_{y3} \\ -\Theta_{x4}r_{x4} - \Theta_{y4}r_{y4} \\ \vdots \\ -\Theta_{xn}r_{xn} - \Theta_{yn}r_{yn} \end{pmatrix},$$

$$\vec{s}_{10} = \begin{pmatrix} \Theta_{y1}r_{x1} + \Theta_{x1}r_{y1} \\ \Theta_{y2}r_{x2} + \Theta_{x2}r_{y2} \\ \Theta_{y3}r_{x3} + \Theta_{x3}r_{y3} \\ \Theta_{y4}r_{x4} + \Theta_{x4}r_{y4} \\ \vdots \\ \Theta_{yn}r_{xn} + \Theta_{xn}r_{yn} \end{pmatrix}, \; \vec{s}_{11} = \begin{pmatrix} \Theta_{z1}r_{x1} + \Theta_{x1}r_{z1} \\ \Theta_{z2}r_{x2} + \Theta_{x2}r_{z2} \\ \Theta_{z3}r_{x3} + \Theta_{x3}r_{z3} \\ \Theta_{z4}r_{x4} + \Theta_{x4}r_{z4} \\ \vdots \\ \Theta_{zn}r_{xn} + \Theta_{xn}r_{zn} \end{pmatrix} \; \text{and} \; \vec{s}_{12} = \begin{pmatrix} \Theta_{z1}r_{y1} + \Theta_{y1}r_{z1} \\ \Theta_{z2}r_{y2} + \Theta_{y2}r_{z2} \\ \Theta_{z3}r_{y3} + \Theta_{y3}r_{z3} \\ \Theta_{z4}r_{y4} + \Theta_{y4}r_{z4} \\ \vdots \\ \Theta_{zn}r_{yn} + \Theta_{yn}r_{zn} \end{pmatrix}$$

equals twelve, wherein at least one acceleration measurement signal $\vec{a} = \begin{pmatrix} a_1 \\ a_2 \\ a_3 \\ a_4 \\ \vdots \\ a_n \end{pmatrix}$ is captured with the linear acceleration sensors (2), and wherein a position, velocity, and/or acceleration signal (1) is generated for the body (1) from the acceleration measurement signal and data that describe the relative position and orientation of the linear acceleration sensors (2) in the body-fixed coordinate system.

2. Method as in claim 1, **characterized in that** after the arrangement of the linear acceleration signals (2) on the positions $P_i$ , at least five measurements are taken in which the body (1) is accelerated linearly and/or about at least one known rotation center in various known directions with respect to an earth-fixed coordinate system, **in that** with each measurement an acceleration measurement signal $\vec{a}_k = \begin{pmatrix} a_{1k} \\ a_{2k} \\ a_{3k} \\ a_{4k} \\ \vdots \\ a_{nk} \end{pmatrix}$ is always captured, and **in that** the data for the position and orientation of the linear acceleration sensors (2) are determined from the acceleration measurement signals $\vec{a}_k$ and the directions and/or the at least one rotation center.

3. Method as in claim 1 or 2, **characterized in that** the relative position of a rotation center about which the body rotates in the space is determined from the velocity signal.

4. Device for determining the relative position, velocity, and/or acceleration of a body (1) displaceable in a three dimensional space, wherein the device for the capture of at least one acceleration measurement signal $\vec{a} = \begin{pmatrix} a_1 \\ a_2 \\ a_3 \\ a_4 \\ \vdots \\ a_n \end{pmatrix}$

has a plurality of n linear acceleration sensors (2) in a body-fixed arrangement with respect to the body (1), wherein the plurality n is at least twelve, wherein the positions $P_i$ on which the linear acceleration sensors (2) are arranged can be described in each case by a stationary position vector $\vec{r}_i = \begin{pmatrix} r_{xi} \\ r_{yi} \\ r_{zi} \end{pmatrix}$ , which indicates the respective position

$P_i$ from a body-fixed reference point (4), wherein the linear acceleration sensors (2) in each case have a sensitive measurement axis (3), which is oriented towards a direction vector $\vec{\Theta}_i = \begin{pmatrix} \Theta_{xi} \\ \Theta_{yi} \\ \Theta_{zi} \end{pmatrix}$ , wherein the respective linear acceleration sensor (2) and the x, y, z axes of a body-fixed coordinate system passing through the reference point (4) are designated in each case by $i \in [1, 2, 3, 4, ... n]$, wherein the position vectors $\vec{r}_i$ and the direction vectors $\vec{\Theta}_i$ are selected so that the rank of a twelve column matrix formed from the column vectors

$$
\vec{s}_1 = \begin{pmatrix} \Theta_{x1} \\ \Theta_{x2} \\ \Theta_{x3} \\ \Theta_{x4} \\ \vdots \\ \Theta_{xn} \end{pmatrix}, \vec{s}_2 = \begin{pmatrix} \Theta_{y1} \\ \Theta_{y2} \\ \Theta_{y3} \\ \Theta_{y4} \\ \vdots \\ \Theta_{yn} \end{pmatrix}, \vec{s}_3 = \begin{pmatrix} \Theta_{z1} \\ \Theta_{z2} \\ \Theta_{z3} \\ \Theta_{z4} \\ \vdots \\ \Theta_{zn} \end{pmatrix},
$$

$$
\vec{s}_4 = \begin{pmatrix} \Theta_{z1}r_{y1} - \Theta_{y1}r_{z1} \\ \Theta_{z2}r_{y2} - \Theta_{y2}r_{z2} \\ \Theta_{z3}r_{y3} - \Theta_{y3}r_{z3} \\ \Theta_{z4}r_{y4} - \Theta_{y4}r_{z4} \\ \vdots \\ \Theta_{zn}r_{yn} - \Theta_{yn}r_{zn} \end{pmatrix}, \vec{s}_5 = \begin{pmatrix} \Theta_{x1}r_{z1} - \Theta_{z1}r_{x1} \\ \Theta_{x2}r_{z2} - \Theta_{z2}r_{x2} \\ \Theta_{x3}r_{z3} - \Theta_{z3}r_{x3} \\ \Theta_{x4}r_{z4} - \Theta_{z4}r_{x4} \\ \vdots \\ \Theta_{xn}r_{zn} - \Theta_{zn}r_{xn} \end{pmatrix}, \vec{s}_6 = \begin{pmatrix} \Theta_{y1}r_{x1} - \Theta_{x1}r_{y1} \\ \Theta_{y2}r_{x2} - \Theta_{x2}r_{y2} \\ \Theta_{y3}r_{x3} - \Theta_{x3}r_{y3} \\ \Theta_{y4}r_{x4} - \Theta_{x4}r_{y4} \\ \vdots \\ \Theta_{yn}r_{xn} - \Theta_{xn}r_{yn} \end{pmatrix},
$$

$$
\vec{s}_7 = \begin{pmatrix} -\Theta_{y1}r_{y1} - \Theta_{z1}r_{z1} \\ -\Theta_{y2}r_{y2} - \Theta_{z2}r_{z2} \\ -\Theta_{y3}r_{y3} - \Theta_{z3}r_{z3} \\ -\Theta_{y4}r_{y4} - \Theta_{z4}r_{z4} \\ \vdots \\ -\Theta_{yn}r_{yn} - \Theta_{zn}r_{zn} \end{pmatrix}, \vec{s}_8 = \begin{pmatrix} -\Theta_{x1}r_{x1} - \Theta_{z1}r_{z1} \\ -\Theta_{x2}r_{x2} - \Theta_{z2}r_{z2} \\ -\Theta_{x3}r_{x3} - \Theta_{z3}r_{z3} \\ -\Theta_{x4}r_{x4} - \Theta_{z4}r_{z4} \\ \vdots \\ -\Theta_{xn}r_{xn} - \Theta_{zn}r_{zn} \end{pmatrix}, \vec{s}_9 = \begin{pmatrix} -\Theta_{x1}r_{x1} - \Theta_{y1}r_{y1} \\ -\Theta_{x2}r_{x2} - \Theta_{y2}r_{y2} \\ -\Theta_{x3}r_{x3} - \Theta_{y3}r_{y3} \\ -\Theta_{x4}r_{x4} - \Theta_{y4}r_{y4} \\ \vdots \\ -\Theta_{xn}r_{xn} - \Theta_{yn}r_{yn} \end{pmatrix},
$$

$$
\vec{s}_{10} = \begin{pmatrix} \Theta_{y1}r_{x1} + \Theta_{x1}r_{y1} \\ \Theta_{y2}r_{x2} + \Theta_{x2}r_{y2} \\ \Theta_{y3}r_{x3} + \Theta_{x3}r_{y3} \\ \Theta_{y4}r_{x4} + \Theta_{x4}r_{y4} \\ \vdots \\ \Theta_{yn}r_{xn} + \Theta_{xn}r_{yn} \end{pmatrix}, \vec{s}_{11} = \begin{pmatrix} \Theta_{z1}r_{x1} + \Theta_{x1}r_{z1} \\ \Theta_{z2}r_{x2} + \Theta_{x2}r_{z2} \\ \Theta_{z3}r_{x3} + \Theta_{x3}r_{z3} \\ \Theta_{z4}r_{x4} + \Theta_{x4}r_{z4} \\ \vdots \\ \Theta_{zn}r_{xn} + \Theta_{xn}r_{zn} \end{pmatrix} \text{ and } \vec{s}_{12} = \begin{pmatrix} \Theta_{z1}r_{y1} + \Theta_{y1}r_{z1} \\ \Theta_{z2}r_{y2} + \Theta_{y2}r_{z2} \\ \Theta_{z3}r_{y3} + \Theta_{y3}r_{z3} \\ \Theta_{z4}r_{y4} + \Theta_{y4}r_{z4} \\ \vdots \\ \Theta_{zn}r_{yn} + \Theta_{yn}r_{zn} \end{pmatrix}
$$

equals twelve, and wherein the linear acceleration sensors (2) are connected to an evaluator (8), which is configured to generate a position, velocity, and/or acceleration signal for the body (1) from the acceleration measurement signal $\vec{a}$ and data that describe the relative position and orientation of the linear acceleration sensors (2) in the body-fixed coordinate system.

5. Device as in claim 4, **characterized in that** the evaluator has a data storage (9) in which at least one data signal for a line vector of a data matrix is filed, which is the inverse of a twelve column matrix comprising the column vectors $s_1$, $s_2$, $s_3$, $s_4$, $s_5$, $s_6$, $s_7$, $s_8$, $s_9$, $s_{10}$, $s_{11}$, $s_{12}$.

6. Device as in claim 5, **characterized in that** the evaluator (8) has means for generating at least one first scalar product signal corresponding to the scalar product from the at least one data signal and the acceleration measurement signal $a$, and **in that** the at least one data signal is selected so that the at least one first scalar product signal corresponds to a vectorial component of the translatory acceleration of the body (1).

7. Device as in claim 5 or 6, **characterized in that** the evaluator (8) has means for generating at least one second scalar product signal corresponding to the scalar product from the at least one data signal and the acceleration measurement signal $a$, and **in that** the at least one data signal is selected so that the second scalar product signal corresponds to a vectorial component of the angulatory acceleration of the body (1).

8. Device as in any one of claims 5 through 7, **characterized in that** the evaluator (8) has means, should the need arise, for the two-fold integration of the at least one second scalar product signal.

9. Device as in any one of claims 5 through 8, **characterized in that** the evaluator (8) has means for generating at least one third scalar product signal corresponding to the scalar product from the at least one data signal and the acceleration measurement signal $a$, **in that** the at least one data signal is selected so that the third scalar product signal corresponds to the square of a vectorial component of the angular velocity of the body (1), and **in that** the evaluator (8) has means for generating a square root signal from the scalar product signal.

10. Device as in any one of claims 5 through 9, **characterized in that** the evaluator (8) has means for generating at least one fourth scalar product signal corresponding to the scalar product from the at least one data signal and the acceleration measurement signal $a$, **in that** the at least one data signal is selected so that the fourth scalar product signal corresponds to the product of two different vectorial components of the angular velocity of the body (1), **in that** the evaluator (8) has means for integration of the scalar product signals detected in each case for the respective vectorial components and for the generation of at least one product signal from the results of these integrations, **in that** the evaluator (8) has a comparison mechanism for comparing the magnitude of this product signal with the fourth scalar product signal, and **in that** the comparison mechanism has an output for an error status signal dependent on the result of the comparison.

11. Device as in any one of claims 5 through 10, **characterized in that** the comparison mechanism is configured to compare the square root signal with the signal generated by integration of the at least one second scalar product signal, and **in that** the comparison mechanism has an output for an error status signal dependent on the result of the comparison.

12. Device as in any one of claims 5 through 11, **characterized in that** the evaluator has means for the integration of the second scalar product signal and for the formation of the square from the result of said integration, **in that** said means for comparing the signal thus received with the third scalar product signal is connected to the comparison mechanism, and **in that** the comparison mechanism has an output for an error status signal dependent on the result of the comparison.

13. Device as in any one of claims 5 through 12, **characterized in that** the evaluator has a differentiation mechanism for the differentiation of the square root signal, **in that** the differentiation mechanism for comparing the differentiated signal with the second scalar product signal is connected to the comparison mechanism, and **in that** the comparison mechanism has an output for an error status signal dependent on the result of the comparison.

14. Device as in any one of claims 4 through 12, **characterized in that** the evaluator (8) is configured so that in the event of a rotary motion of the body about a rotation center it generates a signal for the relative position of a rotation center from the velocity signal.

15. Device as in any one of claims 4 through 14, **characterized in that** it comprises the body (1) and that the body (1) is a vehicle.

**Revendications**

1.  Procédé pour déterminer la position relative, la vitesse et/ou l'accélération d'un corps (1) pouvant être déplacé dans un espace tridimensionnel, un nombre n de capteurs d'accélération linéaire (2), lesquels possèdent respectivement un axe de mesure (3) sensible, étant mis à disposition, le nombre n étant au moins de douze, les capteurs d'accélération linéaire (2) individuels étant respectivement disposés dans une position $P_i$ fixe par rapport au corps (1), laquelle peut être décrite par un vecteur de position fixe $\bar{r}_i = \begin{pmatrix} r_{xi} \\ r_{yi} \\ r_{zi} \end{pmatrix}$, lequel pointe d'un point de référence (4) lié au corps vers la position $P_i$ concernée, les capteurs d'accélération linéaire (2) étant orientés de manière à ce que leur axe de mesure (3) soit respectivement orienté en direction d'un vecteur directionnel $\bar{\Theta}_i = \begin{pmatrix} \Theta_{xi} \\ \Theta_{yi} \\ \Theta_{zi} \end{pmatrix}$, i ∈ [1, 2,

    3, 4, ... n] désignant respectivement le capteur d'accélération linéaire (2) concerné et x, y, z des axes passant par le point de référence (4) d'un système de coordonnées lié au corps, les vecteurs de position $\bar{r}_i$ et les vecteurs directionnels $\bar{\Theta}_i$ étant choisis de manière à ce que le rang d'une matrice à douze colonnes formée à partir des vecteurs colonne

$$\bar{s}_1 = \begin{pmatrix} \Theta_{x1} \\ \Theta_{x2} \\ \Theta_{x3} \\ \Theta_{x4} \\ \vdots \\ \Theta_{xn} \end{pmatrix}, \quad \bar{s}_2 = \begin{pmatrix} \Theta_{y1} \\ \Theta_{y2} \\ \Theta_{y3} \\ \Theta_{y4} \\ \vdots \\ \Theta_{yn} \end{pmatrix}, \quad \bar{s}_3 = \begin{pmatrix} \Theta_{z1} \\ \Theta_{z2} \\ \Theta_{z3} \\ \Theta_{z4} \\ \vdots \\ \Theta_{zn} \end{pmatrix},$$

$$\bar{s}_4 = \begin{pmatrix} \Theta_{z1}r_{y1} - \Theta_{y1}r_{z1} \\ \Theta_{z2}r_{y2} - \Theta_{y2}r_{z2} \\ \Theta_{z3}r_{y3} - \Theta_{y3}r_{z3} \\ \Theta_{z4}r_{y4} - \Theta_{y4}r_{z4} \\ \vdots \\ \Theta_{zn}r_{yn} - \Theta_{yn}r_{zn} \end{pmatrix}, \quad \bar{s}_5 = \begin{pmatrix} \Theta_{x1}r_{z1} - \Theta_{z1}r_{x1} \\ \Theta_{x2}r_{z2} - \Theta_{z2}r_{x2} \\ \Theta_{x3}r_{z3} - \Theta_{z3}r_{x3} \\ \Theta_{x4}r_{z4} - \Theta_{z4}r_{x4} \\ \vdots \\ \Theta_{xn}r_{zn} - \Theta_{zn}r_{xn} \end{pmatrix}, \quad \bar{s}_6 = \begin{pmatrix} \Theta_{y1}r_{x1} - \Theta_{x1}r_{y1} \\ \Theta_{y2}r_{x2} - \Theta_{x2}r_{y2} \\ \Theta_{y3}r_{x3} - \Theta_{x3}r_{y3} \\ \Theta_{y4}r_{x4} - \Theta_{x4}r_{y4} \\ \vdots \\ \Theta_{yn}r_{xn} - \Theta_{xn}r_{n4} \end{pmatrix},$$

$$\bar{s}_7 = \begin{pmatrix} -\Theta_{y1}r_{y1} - \Theta_{z1}r_{z1} \\ -\Theta_{y2}r_{y2} - \Theta_{z2}r_{z2} \\ -\Theta_{y3}r_{y3} - \Theta_{z3}r_{z3} \\ -\Theta_{y4}r_{y4} - \Theta_{z4}r_{z4} \\ \vdots \\ -\Theta_{yn}r_{yn} - \Theta_{zn}r_{zn} \end{pmatrix}, \quad \bar{s}_8 = \begin{pmatrix} -\Theta_{x1}r_{x1} - \Theta_{z1}r_{z1} \\ -\Theta_{x2}r_{x2} - \Theta_{z2}r_{z2} \\ -\Theta_{x3}r_{x3} - \Theta_{z3}r_{z3} \\ -\Theta_{x4}r_{x4} - \Theta_{z4}r_{z4} \\ \vdots \\ -\Theta_{xn}r_{xn} - \Theta_{zn}r_{zn} \end{pmatrix}, \quad \bar{s}_9 = \begin{pmatrix} -\Theta_{x1}r_{x1} - \Theta_{y1}r_{y1} \\ -\Theta_{x2}r_{x2} - \Theta_{y2}r_{y2} \\ -\Theta_{x3}r_{x3} - \Theta_{y3}r_{y3} \\ -\Theta_{x4}r_{x4} - \Theta_{y4}r_{y4} \\ \vdots \\ -\Theta_{xn}r_{xn} - \Theta_{yn}r_{yn} \end{pmatrix},$$

$$\bar{s}_{10} = \begin{pmatrix} \Theta_{y1} r_{x1} + \Theta_{x1} r_{y1} \\ \Theta_{y2} r_{x2} + \Theta_{x2} r_{y2} \\ \Theta_{y3} r_{x3} + \Theta_{x3} r_{y3} \\ \Theta_{y4} r_{x4} + \Theta_{x4} r_{y4} \\ \vdots \\ \Theta_{yn} r_{xn} + \Theta_{xn} r_{yn} \end{pmatrix}, \quad \bar{s}_{11} = \begin{pmatrix} \Theta_{z1} r_{x1} + \Theta_{x1} r_{z1} \\ \Theta_{z2} r_{x2} + \Theta_{x2} r_{z2} \\ \Theta_{z3} r_{x3} + \Theta_{x3} r_{z3} \\ \Theta_{z4} r_{x4} + \Theta_{x4} r_{z4} \\ \vdots \\ \Theta_{zn} r_{xn} + \Theta_{xn} r_{zn} \end{pmatrix} \; et \quad \bar{s}_{12} = \begin{pmatrix} \Theta_{z1} r_{y1} + \Theta_{y1} r_{z1} \\ \Theta_{z2} r_{y2} + \Theta_{y2} r_{z2} \\ \Theta_{z3} r_{y3} + \Theta_{y3} r_{z3} \\ \Theta_{z4} r_{y4} + \Theta_{y4} r_{z4} \\ \vdots \\ \Theta_{zn} r_{yn} + \Theta_{yn} r_{zn} \end{pmatrix},$$

soit égal à douze, moyennant quoi l'on détecte, à l'aide des capteurs d'accélération linéaire (2), au moins un signal de mesure d'accélération $\bar{a} = \begin{pmatrix} a_1 \\ a_2 \\ a_3 \\ a_4 \\ \vdots \\ a_n \end{pmatrix}$ et moyennant quoi l'on forme, à partir du signal de mesure d'accélération et de grandeurs caractéristiques qui décrivent la position relative et l'orientation des capteurs d'accélération linéaire (2) dans le système de coordonnées lié au corps, un signal de position, de vitesse et/ou d'accélération pour le corps (1).

2. Procédé selon la revendication 1, **caractérisé en ce qu'**après la disposition des capteurs d'accélération linéaire (2) aux positions $P_i$, on effectue au moins cinq mesures au cours desquelles le corps (1) est soumis à une accélération par rapport à un système de coordonnées lié à la terre dans différentes directions connues, linéairement et/ou autour d'au moins un centre de rotation connu, **en ce que** lors de chaque mesure, respectivement un signal de mesure d'accélération $\bar{a}_k = \begin{pmatrix} a_{1k} \\ a_{2k} \\ a_{3k} \\ a_{4k} \\ \vdots \\ a_{nk} \end{pmatrix}$ est détecté, et **en ce qu'**à partir des signaux de mesure d'accélération $\bar{a}_k$ et des directions et/ou de cet au moins un centre de rotation, les grandeurs caractéristiques pour la position et l'orientation des capteurs d'accélération linéaire (2) sont déterminées.

3. Procédé selon les revendications 1 ou 2, **caractérisé en ce que** l'on détermine, à partir du signal de vitesse, la position relative d'un centre de rotation autour duquel le corps tourne dans l'espace.

4.
Dispositif pour déterminer la position relative, la vitesse et/ou l'accélération d'un corps (1) pouvant être déplacé dans un espace tridimensionnel, le dispositif pour détecter au moins un signal de mesure d'accélération $\bar{a} = \begin{pmatrix} a_1 \\ a_2 \\ a_3 \\ a_4 \\ \vdots \\ a_n \end{pmatrix}$ présentant un nombre n de capteurs d'accélération linéaire (2) disposés de manière fixe par rapport au corps (1), le nombre n étant au moins de douze, les positions $P_i$ dans lesquelles les capteurs d'accélérations linéaire (2) sont disposés pouvant être respectivement décrites par un vecteur de position fixe $\vec{r}_i = \begin{pmatrix} r_{xi} \\ r_{yi} \\ r_{zi} \end{pmatrix},$ lequel pointe d'un point de référence (4) lié au corps vers la position $P_i$ concernée, les capteurs d'accélération linéaire (2) présentant respectivement un axe de mesure sensible (3) qui est orienté en direction d'un vecteur directionnel $\vec{\Theta}_i = \begin{pmatrix} \Theta_{xi} \\ \Theta_{yi} \\ \Theta_{zi} \end{pmatrix}$ ,

$i \in [1, 2, 3, 4, ... n]$ désignant respectivement le capteur d'accélération linéaire (2) concerné et x, y, z des axes passant par le point de référence (4) d'un système de coordonnées lié au corps, les vecteurs de position $\vec{r}_i$ et les vecteurs directionnels $\vec{\Theta}_i$ étant choisis de manière à ce que le rang d'une matrice à douze colonnes formée à partir des vecteurs colonne

$$\vec{s}_1 = \begin{pmatrix} \Theta_{x1} \\ \Theta_{x2} \\ \Theta_{x3} \\ \Theta_{x4} \\ \vdots \\ \Theta_{xn} \end{pmatrix} , \quad \vec{s}_2 = \begin{pmatrix} \Theta_{y1} \\ \Theta_{y2} \\ \Theta_{y3} \\ \Theta_{y4} \\ \vdots \\ \Theta_{yn} \end{pmatrix} , \quad \vec{s}_3 = \begin{pmatrix} \Theta_{z1} \\ \Theta_{z2} \\ \Theta_{z3} \\ \Theta_{z4} \\ \vdots \\ \Theta_{zn} \end{pmatrix} ,$$

$$\vec{s}_4 = \begin{pmatrix} \Theta_{z1}r_{y1} - \Theta_{y1}r_{z1} \\ \Theta_{z2}r_{y2} - \Theta_{y2}r_{z2} \\ \Theta_{z3}r_{y3} - \Theta_{y3}r_{z3} \\ \Theta_{z4}r_{y4} - \Theta_{y4}r_{z4} \\ \vdots \\ \Theta_{zn}r_{yn} - \Theta_{yn}r_{zn} \end{pmatrix} , \quad \vec{s}_5 = \begin{pmatrix} \Theta_{x1}r_{z1} - \Theta_{z1}r_{x1} \\ \Theta_{x2}r_{z2} - \Theta_{z2}r_{x2} \\ \Theta_{x3}r_{z3} - \Theta_{z3}r_{x3} \\ \Theta_{x4}r_{z4} - \Theta_{z4}r_{x4} \\ \vdots \\ \Theta_{xn}r_{zn} - \Theta_{zn}r_{xn} \end{pmatrix} , \quad \vec{s}_6 = \begin{pmatrix} \Theta_{y1}r_{x1} - \Theta_{x1}r_{y1} \\ \Theta_{y2}r_{x2} - \Theta_{x2}r_{y2} \\ \Theta_{y3}r_{x3} - \Theta_{x3}r_{y3} \\ \Theta_{y4}r_{x4} - \Theta_{x4}r_{y4} \\ \vdots \\ \Theta_{yn}r_{xn} - \Theta_{xn}r_{n4} \end{pmatrix} ,$$

$$\vec{s}_7 = \begin{pmatrix} -\Theta_{y1}r_{y1} - \Theta_{z1}r_{z1} \\ -\Theta_{y2}r_{y2} - \Theta_{z2}r_{z2} \\ -\Theta_{y3}r_{y3} - \Theta_{z3}r_{z3} \\ -\Theta_{y4}r_{y4} - \Theta_{z4}r_{z4} \\ \vdots \\ -\Theta_{yn}r_{yn} - \Theta_{zn}r_{zn} \end{pmatrix} , \quad \vec{s}_8 = \begin{pmatrix} -\Theta_{x1}r_{x1} - \Theta_{z1}r_{z1} \\ -\Theta_{x2}r_{x2} - \Theta_{z2}r_{z2} \\ -\Theta_{x3}r_{x3} - \Theta_{z3}r_{z3} \\ -\Theta_{x4}r_{x4} - \Theta_{z4}r_{z4} \\ \vdots \\ -\Theta_{xn}r_{xn} - \Theta_{zn}r_{zn} \end{pmatrix} , \quad \vec{s}_9 = \begin{pmatrix} -\Theta_{x1}r_{x1} - \Theta_{y1}r_{y1} \\ -\Theta_{x2}r_{x2} - \Theta_{y2}r_{y2} \\ -\Theta_{x3}r_{x3} - \Theta_{y3}r_{y3} \\ -\Theta_{x4}r_{x4} - \Theta_{y4}r_{y4} \\ \vdots \\ -\Theta_{xn}r_{xn} - \Theta_{yn}r_{yn} \end{pmatrix} ,$$

$$\bar{s}_{10} = \begin{pmatrix} \Theta_{y1}r_{x1} + \Theta_{x1}r_{y1} \\ \Theta_{y2}r_{x2} + \Theta_{x2}r_{y2} \\ \Theta_{y3}r_{x3} + \Theta_{x3}r_{y3} \\ \Theta_{y4}r_{x4} + \Theta_{x4}r_{y4} \\ \vdots \\ \Theta_{yn}r_{xn} + \Theta_{xn}r_{yn} \end{pmatrix}, \quad \bar{s}_{11} = \begin{pmatrix} \Theta_{z1}r_{x1} + \Theta_{x1}r_{z1} \\ \Theta_{z2}r_{x2} + \Theta_{x2}r_{z2} \\ \Theta_{z3}r_{x3} + \Theta_{x3}r_{z3} \\ \Theta_{z4}r_{x4} + \Theta_{x4}r_{z4} \\ \vdots \\ \Theta_{zn}r_{xn} + \Theta_{xn}r_{zn} \end{pmatrix} \quad \text{et} \quad \bar{s}_{12} = \begin{pmatrix} \Theta_{z1}r_{y1} + \Theta_{y1}r_{z1} \\ \Theta_{z2}r_{y2} + \Theta_{y2}r_{z2} \\ \Theta_{z3}r_{y3} + \Theta_{y3}r_{z3} \\ \Theta_{z4}r_{y4} + \Theta_{y4}r_{z4} \\ \vdots \\ \Theta_{zn}r_{yn} + \Theta_{yn}r_{zn} \end{pmatrix},$$

soit égal à douze, et les capteurs d'accélération linéaire (2) étant en liaison avec un dispositif d'analyse (8) réalisé pour former un signal de position, de vitesse et/ou d'accélération pour le corps (1) à partir du signal de mesure d'accélération $\bar{a}$ et de grandeurs caractéristiques qui décrivent la position relative et l'orientation des capteurs d'accélération linéaire (2) dans le système de coordonnées lié au corps.

5. Dispositif selon la revendication 4, **caractérisé en ce que** le dispositif d'analyse présente une mémoire de données (9) dans laquelle est déposé au moins un signal de grandeur caractéristique pour un vecteur ligne d'une matrice de grandeurs caractéristiques, laquelle est inverse à une matrice à douze colonnes présentant les vecteurs colonne $\vec{s}_1, \vec{s}_2, \vec{s}_3, \vec{s}_4, \vec{s}_5, \vec{s}_6, \vec{s}_7, \vec{s}_8, \vec{s}_9, \vec{s}_{10}, \vec{s}_{11}, \vec{s}_{12}$.

6. Dispositif selon la revendication 5, **caractérisé en ce que** le dispositif d'analyse (8) présente des moyens pour former au moins un premier signal de produit scalaire correspondant au produit scalaire entre cet au moins un signal de grandeur caractéristique et le signal de mesure d'accélération $\vec{a}$, et **en ce que** cet au moins un signal de grandeur caractéristique est choisi de manière à ce que cet au moins un premier signal de produit scalaire corresponde à une composante vectorielle de l'accélération de translation du corps (1).

7. Dispositif selon les revendications 5 ou 6, **caractérisé en ce que** le dispositif d'analyse (8) présente des moyens pour former au moins un deuxième signal de produit scalaire correspondant au produit scalaire entre cet au moins un signal de grandeur caractéristique et le signal de mesure d'accélération $\vec{a}$, et **en ce que** cet au moins un signal de grandeur caractéristique est choisi de manière à ce que le deuxième signal de produit scalaire corresponde à une composante vectorielle de l'accélération angulaire du corps (1).

8. Dispositif selon l'une des revendications 5 à 7, **caractérisé en ce que** le dispositif d'analyse (8) présente des moyens pour l'intégration double, le cas échéant, de cet au moins un deuxième signal de produit scalaire.

9. Dispositif selon les revendications 5 à 8, **caractérisé en ce que** le dispositif d'analyse (8) présente des moyens pour la formation d'au moins un troisième signal de produit scalaire correspondant au produit scalaire entre cet au moins un signal de grandeur caractéristique et le signal de mesure d'accélération $\vec{a}$, **en ce que** cet au moins un signal de grandeur caractéristique est choisi de manière à ce que le troisième signal de produit scalaire corresponde au carré d'une composante vectorielle de la vitesse angulaire du corps (1), et **en ce que** le dispositif d'analyse (8) présente des moyens pour former un signal de racine carrée à partir du signal de produit scalaire.

10. Dispositif selon l'une des revendications 5 à 9, **caractérisé en ce que** le dispositif d'analyse (8) présente des moyens pour former au moins un quatrième signal de produit scalaire correspondant au produit scalaire entre l'au moins un signal de grandeur caractéristique et le signal de mesure d'accélération $\vec{a}$, **en ce que** cet au moins un signal de grandeur caractéristique est choisi de manière à ce que le quatrième signal de produit scalaire corresponde au produit de deux composantes vectorielles différentes de la vitesse angulaire du corps (1), **en ce que** le dispositif d'analyse (8) présente des moyens pour l'intégration des deuxièmes signaux de produit scalaire respectivement déterminés pour la composante vectorielle concernée et pour la formation d'au moins un signal de produit à partir des résultats de ces intégrations, **en ce que** le dispositif d'analyse (8) présente un dispositif de comparaison pour comparer la valeur de ce signal de produit avec le quatrième signal de produit scalaire, et **en ce que** le dispositif de comparaison possède une sortie pour un signal de statut d'erreur dépendant du résultat de la comparaison.

11. Dispositif selon les revendications 5 à 10, **caractérisé en ce que** le dispositif de comparaison est réalisé pour comparer le signal de racine carrée avec le signal formé par intégration de cet au moins un deuxième signal de produit scalaire, et **en ce que** le dispositif de comparaison possède une sortie pour un signal de statut d'erreur dépendant du résultat de la comparaison.

**12.** Dispositif selon les revendications 5 à 11, **caractérisé en ce que** le dispositif d'analyse présente des moyens pour l'intégration du deuxième signal de produit scalaire et pour la formation du carré à partir du résultat de cette intégration, **en ce que** ces moyens sont reliés au dispositif de comparaison pour comparer le signal ainsi obtenu avec le troisième signal de produit scalaire, et **en ce que** le dispositif de comparaison possède une sortie pour un signal de statut d'erreur dépendant du résultat de la comparaison.

**13.** Dispositif selon les revendications 5 à 12, **caractérisé en ce que** le dispositif d'analyse présente un dispositif de différenciation pour la différenciation du signal de racine carrée, **en ce que** le dispositif de différenciation est en liaison avec le dispositif de comparaison pour comparer le signal différencié avec le deuxième signal de produit scalaire, et **en ce que** le dispositif de comparaison possède une sortie pour un signal de statut d'erreur dépendant du résultat de la comparaison.

**14.** Dispositif selon les revendications 4 à 12, **caractérisé en ce que** le dispositif d'analyse (8) est réalisé de manière à déterminer, à partir du signal de vitesse, un signal pour la position relative d'un centre de rotation lors d'un mouvement de rotation du corps autour d'un centre de rotation.

**15.** Dispositif selon l'une des revendications 4 à 14, **caractérisé en ce qu'**il comprend le corps (1) et **en ce que** le corps (1) est un véhicule automobile.

$$\begin{pmatrix} a_{PS\_1} \\ a_{PS\_2} \\ a_{PS\_3} \\ a_{PS\_4} \\ a_{PS\_5} \\ a_{PS\_6} \\ a_{PS\_7} \\ a_{PS\_8} \\ a_{PS\_9} \\ a_{PS\_10} \\ a_{PS\_11} \\ a_{PS\_12} \end{pmatrix} = \vec{F} + \vec{G}$$

# Fig. 1a

$$\vec{F} = \begin{pmatrix}
\theta_{x1} & \theta_{y1} & \theta_{z1} & \theta_{z1}r_{y1}-\theta_{y1}r_{z1} & -\theta_{z1}r_{x1}+\theta_{x1}r_{z1} & \theta_{y1}r_{x1}-\theta_{x1}r_{y1} \\
\theta_{x2} & \theta_{y2} & \theta_{z2} & \theta_{z2}r_{y2}-\theta_{y2}r_{z2} & -\theta_{z2}r_{x2}+\theta_{x2}r_{z2} & \theta_{y2}r_{x2}-\theta_{x2}r_{y2} \\
\theta_{x3} & \theta_{y3} & \theta_{z3} & \theta_{z3}r_{y3}-\theta_{y3}r_{z3} & -\theta_{z3}r_{x3}+\theta_{x3}r_{z3} & \theta_{y3}r_{x3}-\theta_{x3}r_{y3} \\
\theta_{x4} & \theta_{y4} & \theta_{z4} & \theta_{z4}r_{y4}-\theta_{y4}r_{z4} & -\theta_{z4}r_{x4}+\theta_{x4}r_{z4} & \theta_{y4}r_{x4}-\theta_{x4}r_{y4} \\
\theta_{x5} & \theta_{y5} & \theta_{z5} & \theta_{z5}r_{y5}-\theta_{y5}r_{z5} & -\theta_{z5}r_{x5}+\theta_{x5}r_{z5} & \theta_{y5}r_{x5}-\theta_{x5}r_{y5} \\
\theta_{x6} & \theta_{y6} & \theta_{z6} & \theta_{z6}r_{y6}-\theta_{y6}r_{z6} & -\theta_{z6}r_{x6}+\theta_{x6}r_{z6} & \theta_{y6}r_{x6}-\theta_{x6}r_{y6} \\
\theta_{x7} & \theta_{y7} & \theta_{z7} & \theta_{z7}r_{y7}-\theta_{y7}r_{z7} & -\theta_{z7}r_{x7}+\theta_{x7}r_{z7} & \theta_{y7}r_{x7}-\theta_{x7}r_{y7} \\
\theta_{x8} & \theta_{y8} & \theta_{z8} & \theta_{z8}r_{y8}-\theta_{y8}r_{z8} & -\theta_{z8}r_{x8}+\theta_{x8}r_{z8} & \theta_{y8}r_{x8}-\theta_{x8}r_{y8} \\
\theta_{x9} & \theta_{y9} & \theta_{z9} & \theta_{z9}r_{y9}-\theta_{y9}r_{z9} & -\theta_{z9}r_{x9}+\theta_{x9}r_{z9} & \theta_{y9}r_{x9}-\theta_{x9}r_{y9} \\
\theta_{x10} & \theta_{y10} & \theta_{z10} & \theta_{z10}r_{y10}-\theta_{y10}r_{z10} & -\theta_{z10}r_{x10}+\theta_{x10}r_{z10} & \theta_{y10}r_{x10}-\theta_{x10}r_{y10} \\
\theta_{x11} & \theta_{y11} & \theta_{z11} & \theta_{z11}r_{y11}-\theta_{y11}r_{z11} & -\theta_{z11}r_{x11}+\theta_{x11}r_{z11} & \theta_{y11}r_{x11}-\theta_{x11}r_{y11} \\
\theta_{x12} & \theta_{y12} & \theta_{z12} & \theta_{z12}r_{y12}-\theta_{y12}r_{z12} & -\theta_{z12}r_{x12}+\theta_{x12}r_{z12} & \theta_{y12}r_{x12}-\theta_{x12}r_{y12}
\end{pmatrix} \cdot \begin{pmatrix} A_x \\ A_y \\ A_z \\ \omega_x \\ \omega_y \\ \omega_z \end{pmatrix} +$$

Fig. 1b

EP 1 889 006 B1

$$\vec{G} = \begin{pmatrix} -\theta_{y1}r_{y1} - \theta_{z1}r_{z1} & -\theta_{x1}r_{x1} - \theta_{z1}r_{z1} & -\theta_{x1}r_{x1} - \theta_{y1}r_{y1} & \theta_{y1}r_{x1} + \theta_{x1}r_{y1} & \theta_{z1}r_{x1} + \theta_{x1}r_{z1} & \theta_{z1}r_{y1} + \theta_{y1}r_{z1} \\ -\theta_{y2}r_{y2} - \theta_{z2}r_{z2} & -\theta_{x2}r_{x2} - \theta_{z2}r_{z2} & -\theta_{x2}r_{x2} - \theta_{y2}r_{y2} & \theta_{y2}r_{x2} + \theta_{x2}r_{y2} & \theta_{z2}r_{x1} + \theta_{x2}r_{z2} & \theta_{z2}r_{y2} + \theta_{y2}r_{z2} \\ -\theta_{y3}r_{y3} - \theta_{z3}r_{z3} & -\theta_{x3}r_{x3} - \theta_{z3}r_{z3} & -\theta_{x3}r_{x3} - \theta_{y3}r_{y3} & \theta_{y3}r_{x3} + \theta_{x3}r_{y3} & \theta_{z3}r_{x1} + \theta_{x3}r_{z3} & \theta_{z3}r_{y3} + \theta_{y3}r_{z3} \\ -\theta_{y4}r_{y4} - \theta_{z4}r_{z4} & -\theta_{x4}r_{x4} - \theta_{z4}r_{z4} & -\theta_{x4}r_{x4} - \theta_{y4}r_{y4} & \theta_{y4}r_{x4} + \theta_{x4}r_{y4} & \theta_{z4}r_{x1} + \theta_{x4}r_{z4} & \theta_{z4}r_{y4} + \theta_{y4}r_{z4} \\ -\theta_{y5}r_{y5} - \theta_{z5}r_{z5} & -\theta_{x5}r_{x5} - \theta_{z5}r_{z5} & -\theta_{x5}r_{x5} - \theta_{y5}r_{y5} & \theta_{y5}r_{x5} + \theta_{x5}r_{y5} & \theta_{z5}r_{x1} + \theta_{x5}r_{z5} & \theta_{z5}r_{y5} + \theta_{y5}r_{z5} \\ -\theta_{y6}r_{y6} - \theta_{z6}r_{z6} & -\theta_{x6}r_{x6} - \theta_{z6}r_{z6} & -\theta_{x6}r_{x6} - \theta_{y6}r_{y6} & \theta_{y6}r_{x6} + \theta_{x6}r_{y6} & \theta_{z6}r_{x1} + \theta_{x6}r_{z6} & \theta_{z6}r_{y6} + \theta_{y6}r_{z6} \\ -\theta_{y7}r_{y7} - \theta_{z7}r_{z7} & -\theta_{x7}r_{x7} - \theta_{z7}r_{z7} & -\theta_{x7}r_{x7} - \theta_{y7}r_{y7} & \theta_{y7}r_{x7} + \theta_{x7}r_{y7} & \theta_{z7}r_{x1} + \theta_{x7}r_{z7} & \theta_{z7}r_{y7} + \theta_{y7}r_{z7} \\ -\theta_{y8}r_{y8} - \theta_{z8}r_{z8} & -\theta_{x8}r_{x8} - \theta_{z8}r_{z8} & -\theta_{x8}r_{x8} - \theta_{y8}r_{y8} & \theta_{y8}r_{x8} + \theta_{x8}r_{y8} & \theta_{z8}r_{x1} + \theta_{x8}r_{z8} & \theta_{z8}r_{y8} + \theta_{y8}r_{z8} \\ -\theta_{y9}r_{y9} - \theta_{z9}r_{z9} & -\theta_{x9}r_{x9} - \theta_{z9}r_{z9} & -\theta_{x9}r_{x9} - \theta_{y9}r_{y9} & \theta_{y9}r_{x9} + \theta_{x9}r_{y9} & \theta_{z9}r_{x1} + \theta_{x9}r_{z9} & \theta_{z9}r_{y9} + \theta_{y9}r_{z9} \\ -\theta_{y10}r_{y10} - \theta_{z10}r_{z10} & -\theta_{x10}r_{x10} - \theta_{z10}r_{z10} & -\theta_{x10}r_{x10} - \theta_{y10}r_{y10} & \theta_{y10}r_{x10} + \theta_{x10}r_{y10} & \theta_{z10}r_{x10} + \theta_{x10}r_{z10} & \theta_{z10}r_{y10} + \theta_{y10}r_{z10} \\ -\theta_{y11}r_{y11} - \theta_{z11}r_{z11} & -\theta_{x11}r_{x11} - \theta_{z11}r_{z11} & -\theta_{x11}r_{x11} - \theta_{y11}r_{y11} & \theta_{y11}r_{x11} + \theta_{x11}r_{y11} & \theta_{z11}r_{x11} + \theta_{x11}r_{z11} & \theta_{z11}r_{y11} + \theta_{y11}r_{z11} \\ -\theta_{y12}r_{y12} - \theta_{z12}r_{z12} & -\theta_{x12}r_{x12} - \theta_{z12}r_{z12} & -\theta_{x12}r_{x12} - \theta_{y12}r_{y12} & \theta_{y12}r_{x12} + \theta_{x12}r_{y12} & \theta_{z12}r_{x12} + \theta_{x12}r_{z12} & \theta_{z12}r_{y12} + \theta_{y12}r_{z12} \end{pmatrix} \bullet \begin{pmatrix} \omega_x^2 \\ \omega_y^2 \\ \omega_z^2 \\ \omega_x \omega_y \\ \omega_x \omega_z \\ \omega_y \omega_z \end{pmatrix}$$

## Fig. 1c

EP 1 889 006 B1

Fig. 2

Fig. 3

| i | 1 | 2 | 3 | 4 | 5 | 6 | 7 | 8 | 9 | 10 | 11 | 12 |
|---|---|---|---|---|---|---|---|---|---|---|---|---|
| $r_{xi}$ [m] | 0 | 0 | 0 | -0,5 | -0,5 | -0,5 | 0,5 | 0,5 | 0,5 | 0 | 0 | 0 |
| $r_{yi}$ [m] | 0,5 | 0,5 | 0,5 | 0,5 | 0,5 | 0,5 | 0,5 | 0,5 | 0,5 | -0,5 | -0,5 | -0,5 |
| $r_{zi}$ [m] | -0,5 | -0,5 | -0,5 | 0,5 | 0,5 | 0,5 | 0,5 | 0,5 | 0,5 | 0 | 0 | 0 |

## Fig. 4

| i | 1 | 2 | 3 | 4 | 5 | 6 | 7 | 8 | 9 | 10 | 11 | 12 |
|---|---|---|---|---|---|---|---|---|---|---|---|---|
| $\Theta_{xi}$ [-] | -1 | 0 | 0 | 0 | 1 | 0 | 0 | -1 | 0 | 0 | 0 | 1 |
| $\Theta_{yi}$ [-] | 0 | 1 | 0 | 0 | 0 | -1 | 0 | 0 | -1 | 0 | 1 | 0 |
| $\Theta_{zi}$ [-] | 0 | 0 | 1 | -1 | 0 | 0 | -1 | 0 | 0 | -1 | 0 | 0 |

## Fig. 5

## Fig. 8

$$
A = \begin{pmatrix}
-1 & 0 & 0 & 0 & 0.5 & 0.5 & 0 & 0 & 0 & -0.5 & 0.5 & 0 \\
0 & 1 & 0 & 0.5 & 0 & 0 & -0.5 & 0 & -0.5 & 0 & 0 & -0.5 \\
0 & 0 & 1 & 0.5 & 0 & 0 & 0.5 & 0.5 & 0 & 0 & 0 & 0.5 \\
0 & 0 & -1 & -0.5 & -0.5 & 0 & 0.5 & 0.5 & 0 & 0 & 0.5 & -0.5 \\
1 & 0 & 0 & 0 & 0.5 & -0.5 & 0 & 0.5 & 0.5 & 0.5 & 0.5 & 0 \\
0 & -1 & 0 & 0.5 & 0 & 0.5 & 0.5 & 0 & 0.5 & 0.5 & 0 & -0.5 \\
0 & 0 & -1 & -0.5 & 0.5 & 0 & 0.5 & 0.5 & 0 & 0 & -0.5 & -0.5 \\
-1 & 0 & 0 & 0 & -0.5 & 0.5 & 0 & 0.5 & 0.5 & -0.5 & -0.5 & 0 \\
0 & -1 & 0 & 0.5 & 0 & -0.5 & 0.5 & 0 & 0.5 & -0.5 & 0 & -0.5 \\
0 & 0 & -1 & 0.5 & 0 & 0 & 0 & 0 & 0 & 0 & 0 & 0.5 \\
0 & 1 & 0 & 0 & 0 & 0 & 0.5 & 0 & 0.5 & 0 & 0 & 0 \\
1 & 0 & 0 & 0 & 0 & 0.5 & 0 & 0 & 0 & -0.5 & 0 & 0
\end{pmatrix}
$$

## Fig. 6

$$
\begin{pmatrix}
-0.25 & 0 & 0 & 0 & 0.125 & 0 & 0 & -0.125 & 0 & 0 & 0 & 0.5 \\
0 & 0.25 & 0 & 0 & 0 & -0.125 & 0 & 0 & -0.125 & 0 & 0.5 & 0 \\
0 & 0 & 0.25 & -0.125 & 0 & 0 & -0.125 & 0 & 0 & -0.5 & 0 & 0 \\
0 & 0.5 & 0.25 & -0.125 & 0 & 0.25 & -0.125 & 0 & 0.25 & 0.5 & 0 & 0 \\
0.5 & 0 & 0 & -0.5 & 0.25 & 0 & 0.5 & -0.25 & 0 & 0 & 0 & 0 \\
0.25 & 0 & 0 & 0 & -0.125 & 0.5 & 0 & 0.125 & -0.5 & 0 & 0 & 0.5 \\
0 & -0.25 & 0.5 & 0.25 & -0.5 & 0.125 & 0.25 & -0.5 & 0.125 & 0 & 0.5 & 0 \\
0 & 0.25 & 0.5 & 0.25 & 0.5 & -0.125 & 0.25 & 0.5 & -0.125 & 0 & -0.5 & 0 \\
0 & -0.25 & -0.5 & -0.25 & 0.5 & 0.125 & -0.25 & 0.5 & 0.125 & 0 & 0.5 & 0 \\
-0.25 & 0 & 0 & 0 & 0.125 & 0.5 & 0 & -0.125 & -0.5 & 0 & 0 & -0.5 \\
0.5 & 0 & 0 & 0.5 & 0.25 & 0 & -0.5 & -0.25 & 0 & 0 & 0 & 0 \\
0 & -0.5 & 0.25 & -0.125 & 0 & -0.25 & -0.125 & 0 & -0.25 & 0.5 & 0 & 0
\end{pmatrix}
$$

## Fig. 7

30

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19962687 A1